# EUROPEAN PATENT APPLICATION

(11) **EP 4 693 561 A1**
(43) Date of publication of application: **11.02.2026**
(21) Application number: 24781167.2
(22) Date of filing: 25.03.2024
(51) Int. Cl.: H01M 10/0565, H01M 10/052, H01M 4/38, H01M 4/36, H01M 4/587, H01M 4/134

(54) **LITHIUM METAL BATTERY AND MANUFACTURING METHOD THEREFOR**

(30) Priority: 26.03.2023 KR 20230039344; 28.04.2023 KR 20230056581
(71) Applicant: SAMSUNG SDI CO., LTD., Yongin-si, Gyeonggi-do 17084 (KR)
(72) Inventor: BAE, Woo Jin, Yongin-Si Gyeonggi-do 17084 (KR); PARK, Jin Hwan, Yongin-Si Gyeonggi-do 17084 (KR); MOON, Jong Seok, Yongin-Si Gyeonggi-do 17084 (KR); LEE, Kang Hee, Yongin-Si Gyeonggi-do 17084 (KR); KIM, Hee Min, Yongin-Si Gyeonggi-do 17084 (KR); PARK, Jong Seok, Yongin-Si Gyeonggi-do 17084 (KR); WOO, Hyun Sik, Yongin-Si Gyeonggi-do 17084 (KR); LEE, Chang Wook, Yongin-Si Gyeonggi-do 17084 (KR)
(74) Representative: Michalski Hüttermann & Partner Patentanwälte mbB
(86) International application number: PCT/KR2024/003733
(87) International publication number: WO 2024/205176

(57) **Abstract**

Provided are a lithium metal battery and a manufacturing method therefor, the lithium metal battery including: a cathode; an anode current collector; and an electrolyte layer arranged between the cathode and the anode current collector, wherein the electrolyte layer includes a gel-type polymer electrolyte, and the gel-type polymer electrolyte includes a crosslinked polymer and a liquid electrolyte containing a lithium salt and an organic solvent, the crosslinked polymer including a polymerization product of a multifunctional polymerizable monomer and one or more selected from a compound of Formula 1 and a compound of Formula 1-1. Descriptions of Formula 1 and Formula 1-1 are as set forth in the detailed description.

## Description

### Technical Field

Disclosed are a lithium metal battery and a manufacturing method therefor.

### Background Art

Lithium metal batteries currently available in the market mainly use carbon-based anode active materials such as graphite. Such carbon-based anode active materials have high stability in lithium ion batteries because there is no change in volume during charging and discharging. However, since their capacity is small, anode active materials with higher capacity are required.

In this regard, a lithium metal with a much higher theoretical capacity than that of a carbon-based anode active material may be used as an anode active material.

Side reactions between a lithium metal and an electrolyte during charging and discharging give rise to formation of dendrites on a surface of the lithium metal, and the growth of dendrites cause a short circuit between a cathode and an anode, which may cause degradation in lifespan characteristics of a lithium metal battery including the lithium metal.

### Disclosure of Invention

### Technical Goal of the Invention

One aspect is to provide a lithium metal battery having a new structure.

Another aspect is to provide a manufacturing method for the lithium metal battery.

### Means for Achieving Technical Goal

According to one aspect, a lithium metal battery includes: a cathode; an anode current collector; and an electrolyte layer arranged between the cathode and the anode current collector,
wherein the electrolyte layer includes a gel-type polymer electrolyte, and
the gel-type polymer electrolyte includes
a crosslinked polymer and a liquid electrolyte, the crosslinked polymer including a polymerization product of a multifunctional polymerizable monomer and one or more selected from a compound of Formula 1 and a compound of Formula 1-1, and
the liquid electrolyte containing a lithium salt and an organic solvent: 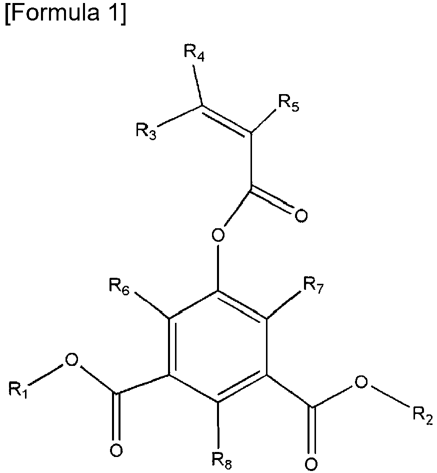
wherein, in Formula 1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group, 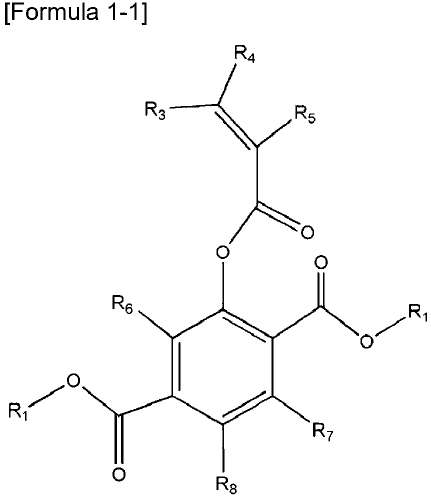
wherein, in Formula 1-1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, R₆ to R₈ are each independently hydrogen a substituted or unsubstituted C1-C30 alkyl group a or substituted or unsubstituted C6-C30 aryl group.

The electrolyte layer may further include a separator.

The lithium metal battery may further include, between the electrolyte layer and the anode current collector, an anode active material layer, a protective layer, or a combination thereof.

The lithium metal battery may further include a lithium metal layer between the electrolyte layer and the anode current collector, wherein in X-ray photoelectron spectroscopy (XPS) on the surface of the lithium metal layer, an intensity of a fluorine peak may be greater than that of an oxygen peak.

In pores of the separator, the gel-type polymer electrolyte may exist.

According to another aspect, a manufacturing method for the lithium metal battery includes: preparing an anode current collector;
preparing an electrolyte layer;
preparing a cathode;
stacking the anode current collector, the electrolyte layer, and the cathode to prepare an assembly;
injecting a composition for forming a gel-type polymer electrolyte to the assembly; and
cross-linking the injected composition for forming a gel-type polymer electrolyte to prepare a lithium metal battery including an electrolyte layer including a gel-type polymer electrolyte, wherein
the composition for forming a gel-type polymer electrolyte includes: a multifunctional polymerizable monomer; one or more selected from a compound represented by Formula 1 and a compound represented by Formula 1-1; a liquid electrolyte; and an initiator: 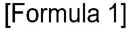 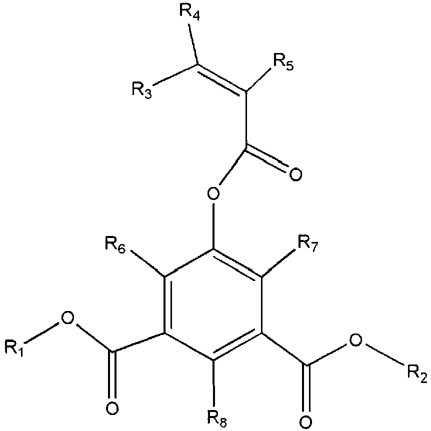
[34] wherein, in Formula 1, R₁ and R₂ are a substituted or unsubstituted C1-C30 alkyl group or a substituted or unsubstituted C6-C30 aryl group,
[35] R₃ to R₅ are each independently hydrogen or a substituted or unsubstituted C1-C30 alkyl group, and
[36] R₆ to R₈ are each independently hydrogen, a substituted or unsubstituted C1-C30 alkyl group, or a substituted or unsubstituted C6-C30 aryl group, 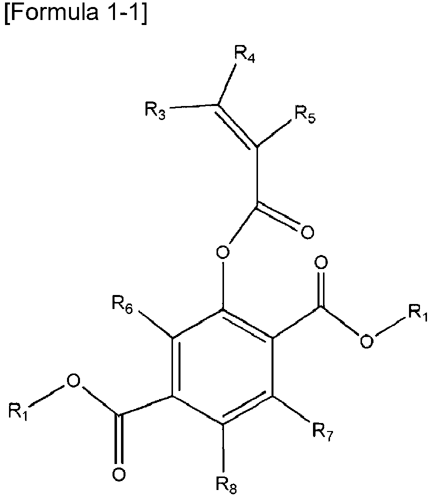
wherein, in Formula 1-1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group.

### Advantageous Effects of Invention

According to one aspect, a gel-type polymer electrolyte with reduced interfacial resistance and bulk resistance may be provided. Using the gel-type polymer electrolyte, a lithium metal battery having improved high-rate characteristics and lifespan characteristics may be provided.

### Brief Description of the Drawings

FIG. 1A is schematic diagram of a stacked structure of a lithium metal battery according to an embodiment.
FIG. 1B is schematic diagram of a stacked structure of a lithium metal battery according to another embodiment.
FIGS. 2A and 2B are scanning electron microscope (SEM) photographs showing an electrodeposition shape of the surface of a lithium metal formed on an anode current collector in a lithium metal battery of Example 1.
FIGS. 3A and 3B are SEM photographs showing an electrode position shape of a lithium metal formed on an anode current collector in a lithium metal battery of Comparative Example 1.
FIG. 4 is a schematic diagram of a lithium metal battery according to an embodiment.
FIG. 5 is a schematic diagram of a lithium metal battery according to another embodiment.
FIG. 6 is a schematic diagram of a lithium metal battery according to another embodiment.
FIG. 7 shows an NMR spectrum of DMI-Ac prepared according to Preparation Example 1.

**<Explanation of Reference Numerals Designating the Major Elements of the Drawings>**

| | | | |
|---|---|---|---|
| 1: | Lithium metal battery | 2, 20: | Anode |
| 3, 10: | Cathode | 4: | Separator |
| 5: | Battery case | 6: | Cap assembly |
| 7: | Battery structure | 8: | Electrode tab |

### Best Mode for Carrying out the Invention

The present inventive concept described hereinbelow may have various modifications and various embodiments, and in this regard, example embodiments will be illustrated in the drawings and more fully described. The present inventive concept may, however, should not be construed as limited to the example embodiments set forth herein, and rather, should be understood as covering all modifications, equivalents, or alternatives falling within the scope of the present inventive concept.

The terms as used herein are for the purpose of describing particular embodiments only, and are not intended to be limiting the present inventive concept. An expression used in the singular encompasses the expression of the plural, unless it has a clearly different meaning in the context. It will be further understood that the terms "comprises" and/or "comprising," or "includes" and/or "including" when used in this specification, may specify the presence of stated features, regions, integers, steps, operations, elements, and/or components, but may not preclude the presence or addition of one or more other features, regions, integers, steps, operations, elements, components, and/or groups thereof. As used herein, "/" may be interpreted as "and" or as "or," depending on the context.

In the drawings, thicknesses may be magnified or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element. In the present specification and drawings, components having substantially the same functional features are referred to the same reference numerals, and thus repeated descriptions will be omitted.

In the present disclosure, the term "particle diameter" of particles refers to an average diameter of particles when the particles are spherical, and refers to an average major axis length of particles when the particles are non-spherical. The particle diameter of the particles may be measured by using a particle size analyzer (PSA). The "particle diameter' of the particles refers to, for example, an average particle diameter. The average particle diameter may be, for example, a median particle diameter D50. The median particle diameter D50 is a particle size corresponding to a 50 % cumulative volume calculated from particles having a small particle size in a particle size distribution measured by, for example, a laser diffraction method. The average particle diameter and average long-axis length of a particle may be measured using scanning electron microscope. When the size of the particles is measured by using a scanning electron microscope, the size of the particles is determined by the average value of 30 or more randomly extracted particles of 1 µm or more excluding differentials.

In the present disclosure, the term "metal" may include both a metal and a metalloid, such as silicon and germanium, in an elemental state or an ionic state.

In the present disclosure, the term "alloy" may refer to a mixture of two or more metals.

In the present disclosure, the term "cathode active material" may refer to a cathode material capable of undergoing lithiation and delithiation.

In the present disclosure, the term "anode electrode active material" may refer to an anode material capable of undergoing lithiation and delithiation.

In the present disclosure, the terms "lithiation" and "lithiate" may refer to a process of adding lithium to a cathode active material or an anode active material.

In the present disclosure, the terms "delithiation" and "delithiate" may refer to a process of removing lithium from a cathode active material or an anode active material.

In the present disclosure, the terms "charging" and "charge" may refer to a process of providing electrochemical energy to a battery.

In the present disclosure, the terms "discharging" and "discharge" may refer to a process of eliminating electrochemical energy from a battery.

In the present disclosure, the terms "positive electrode" and "cathode" may refer to an electrode in which electrochemical reduction and lithiation occur during a discharge process.

In the present disclosure, the terms "negative electrode" and "anode" may refer to an electrode in which electrochemical oxidation and delithiation occur during a charge process.

Hereinafter, a lithium metal battery according to embodiments, and a manufacturing method therefor will be described in more detail.

An anodeless lithium metal battery may be a battery using an anode current collector alone without an anode active material layer, wherein the battery may be operated through a process in which lithium ions transferred from a cathode are precipitated on a surface of an anode current collector upon charging, and the lithium precipitated on the surface of the anode current collector dissolves again and intercalates into the cathode upon discharging.

Such an anodeless lithium metal battery may have advantages of maximizing the energy density per volume or weight of the battery because a lithium metal used as an anode active material is omitted. However, lithium metal precipitated during operation gives rise to growth of lithium dendrites due to a non-uniform current crowding phenomenon during oxidation/reduction processes. Lithium dendrites may not only cause loss of lithium anode and reduce capacity and lifespan characteristics of the battery, but also cause a short circuit at the anode and the cathode and give rise to safety issues.

To address the aforementioned issues, methods have been proposed that introduce a protective layer to minimize contact between lithium and the electrolyte, thereby reducing side reactions, or that utilizes a gel-type polymer electrolyte to introduce liquid electrolyte into a crosslinked polymer network so that an electrolyte exposure at the electrode surface may be minimized and a uniform flow of lithium ions is made throughout the electrode, thereby suppressing dendritic growth of lithium.

Gel-type polymer electrolytes known to date have been known to have a semi-solid form compared to pure liquid electrolytes, offering improved safety but also higher resistance and a tendency to decompose at high voltages, causing a difficulty to use at high voltages. In addition, conventional gel-type polymer electrolytes mainly use non-ionic conductive crosslinking agents, resulting in reduced ion conductivity, increased resistance, and insufficient high-rate characteristics, and thus improvements are requires for these issues.

According to an embodiment, a lithium metal battery includes: a cathode; an anode current collector; and an electrolyte layer arranged between the cathode and the anode current collector, wherein the electrolyte layer includes a gel-type polymer electrolyte, and the gel-type polymer electrolyte includes a crosslinked polymer and a liquid electrolyte containing a lithium salt and an organic solvent, the crosslinked polymer including a polymerization product of a multifunctional polymerizable monomer and one or more selected from a compound of Formula 1 and a compound of Formula 1-1:

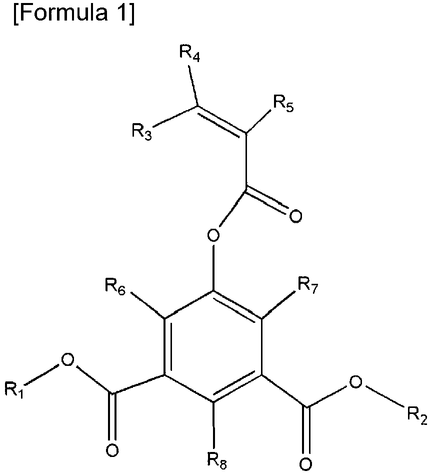

wherein, in Formula 1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group, 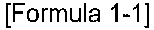 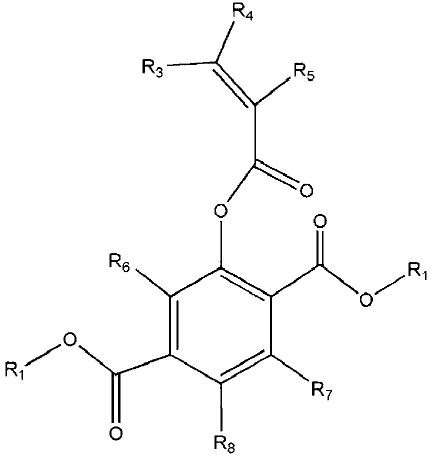
wherein, in Formula 1-1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group.

In an embodiment, the gel-type polymer electrolyte may include a crosslinked polymer and a liquid electrolyte,
the crosslinked polymer including a polymerization product of a multifunctional polymerizable monomer and a compound of Formula 1.

In another embodiment, the gel-type polymer electrolyte may include a crosslinked polymer and a liquid electrolyt,
the crosslinked polymer including a polymerization product of a multifunctional polymerizable monomer and a compound of Formula 1-1.

The gel-type polymer electrolyte may have a semi-solid form.

The multifunctional polymerizable monomer refers to a multifunctional crosslinking agent having three or more crosslinkable functional groups. A material that is electrochemically stable in the operating environment of a cathode, such as at a voltage of about 4.3 V or higher, that uses a cathode active material having a nickel content of 90 mol% or more may be used. The number of crosslinkable functional groups may be, for example, 3 to 10 or 3 to 6. The crosslinking agent may be one or more selected from pentaerythritol tetraacrylate, pentaerythritol tetramethaacrylate, trimethylolpropane triacrylate, trimethylolpropane trimethaacrylate, propoxylated(3) trimethylolpropane triacrylate (PO(3)TMPTA), propoxylated(6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl)isocyanurate (THEICTA), and dipentaerythritol pentaacrylate (DPEPA).

The lithium metal battery may further include an anode active material layer, a protective layer, or a combination thereof, between the anode current collector and the electrolyte layer.

The lithium metal battery may further include a separator between the anode current collector and the electrolyte layer.

The separator may include a porous substrate. When the lithium metal battery includes the separator, the anode active material layer, the protective layer ,or a combination thereof may be arranged between the anode current collector and the separator. As such, the lithium metal battery may include the anode active material layer and/or the protective layer between the anode current collector and the separator, or may be free of the anode active material layer or the protective layer.

In an embodiment, the lithium metal battery may include: the anode current collector; the separator arranged on the anode current collector; the gel-type polymer electrolyte arranged on the separator; and the cathode arranged on the gel-type polymer electrolyte, wherein the gel-type polymer electrolyte may includ a crosslinked polymer and a liquid electrolyte, the crosslinked polymer including a polymerization product of a multifunctional polymerizable monomer and one or more selected from the compound of Formula 1 and the compound of Formula 1-1.

Redox mediators that undergo oxidation/reduction at a high voltage are well known, but little is known about low-potential redox mediators that undergo oxidation/reduction at a low potential.

The reason why low-potential redox mediators are required instead of redox mediators that undergo oxidation/reduction at a high voltage is that, as in high voltages, the low-potential redox mediators enable the storage and rapid transfer of electrons between the anode current collector and the active material, thereby improving the charging and discharging speed. For use as the low-potential redox mediator, dimethyl isophthalate (DMI) is known in the art. DMI may be used as an electrolyte solution additive, but cannot participate in polymerization and therefore cannot be included in the gel-type polymer electrolyte structure, requiring improvements when using DMI.

In an embodiment, the gel-type polymer electrolyte uses, instead of DMI, the compound of Formula 1 having an isophthalate unit as a low-potential redox mediator. The compound of Formula 1 has an advantage in price competitiveness because it is cheaper than compounds with DET units. In the compound of Formula 1, a -COOR functional group is converted to a -COOH group during a deprotection process, and this functional group forms -COO-Li⁺ with lithium ions. In this regard, the compound may serve as a lithium ion receptor, leading to increased transfer of lithium ions.

In the gel-type polymer electrolyte, an amount of the crosslinked polymer may be, based on 100 parts by weight of the total weight of the gel-type polymer electrolyte, 1 to 10 parts by weight, 2 to 8 parts by weight, or 3 to 7 parts by weight, and an amount of the liquid electrolyte may be, based on 100 parts by weight of the total weight of the gel-type polymer electrolyte, 90 to 99 parts by weight, 92 to 98 parts by weight, or 93 to 97 parts by weight.

The mixed weight ratio of the multifunctional polymerizable monomer and the compound of Formula 1 may be 30:1 to 2:1. When the mixed weight ratio of the multifunctional polymerizable monomer and the compound of Formula 1 is within the range above, the gel-type polymer electrolyte with reduced interfacial resistance and reduced bulk resistance may be provided.

The compound of Formula 1 is a low-potential redox mediator that stores electrons between the active material and the current collector and rapidly transfer the electrons to improve the charging and discharging speed.

In an embodiment, a redox potential of the compound of Formula 1 may be less than 2 eV (Li/L+), 2 eV or less, 1.5 eV or less, or 1.0 to 1.5 eV. In another embodiment, the redox potential of the compound of Formula 1 may be, for example, 1 eV to 2 eV (Li/L+). As such, it is a redox material that operates at a low potential, and when added to a composition for forming a gel-type polymer electrolyte, an effect of reducing resistance may be exhibited.

In detail, when the compound of Formula 1 forms a crosslinked polymer by using a crosslinkable monomer during preparation of a gel-type polymer electrolyte, the ion transfer speed within the gel-type polymer electrolyte may be improved, thereby reducing resistance.

The compound of Formula 1 may be crosslinked with a multifunctional polymerizable monomer to form a crosslinked polymer. The crosslinked polymer may be formed by a reaction between double bonds of the compound of Formula 1 and crosslinkable functional groups of the multifunctional polymerizable monomer.

A mixed weight ratio of the multifunctional polymerizable monomer and the compound of Formula 1 may be 7:1 to 2:1. When a cross-linking reaction is carried out at this mixed weight ratio, a gel-type polymer electrolyte with improved ion conductivity may be obtained, and in this regard, a lithium metal battery with improved high-rate characteristics may be manufactured.

The compound of Formula 1 may be, for example, a compound of Formula 2:

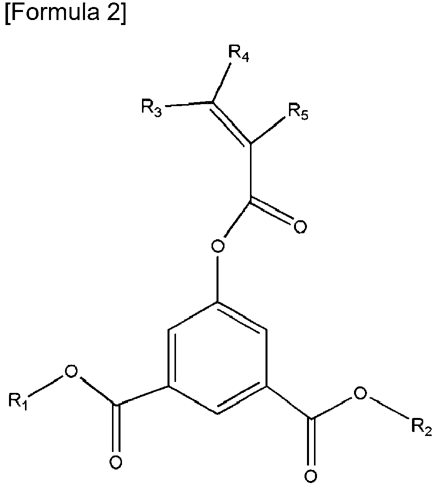

wherein, in Formula 2, R₁ and R₂ may be a C1-C30 alkyl group, and R₃ to R₅ may each independently be hydrogen or a C1-C30 alkyl group. In addition, R₁, R₂, and R₅ may each independently be a methyl group, a propyl group, a butyl group, or a pentyl group.

The compound of Formula 1-1 may be, for example, a compound of Formula 2-1:

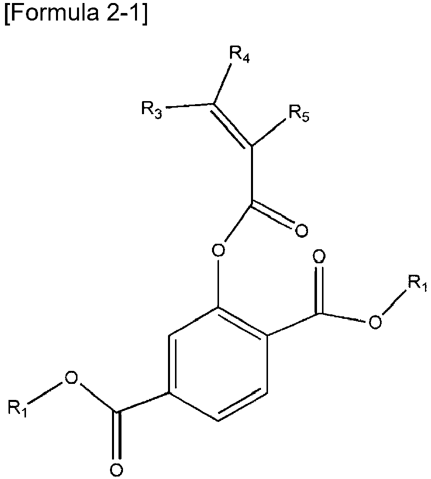

wherein, in Formula 2-1, R₁ and R₂ may be a C1-C30 alkyl group, and R₃ to R₅ may each independently be hydrogen or a C1-C30 alkyl group.

The compound of Formula 2 may be, for example, one or more selected from compounds of Formulae 3 to 6:

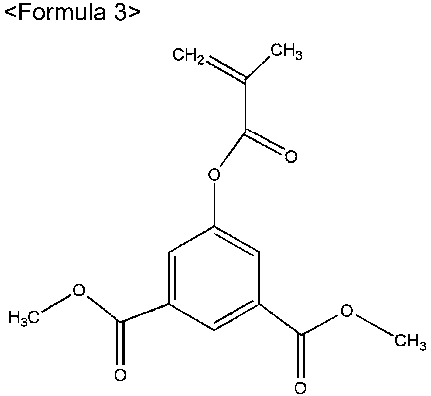

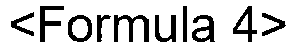

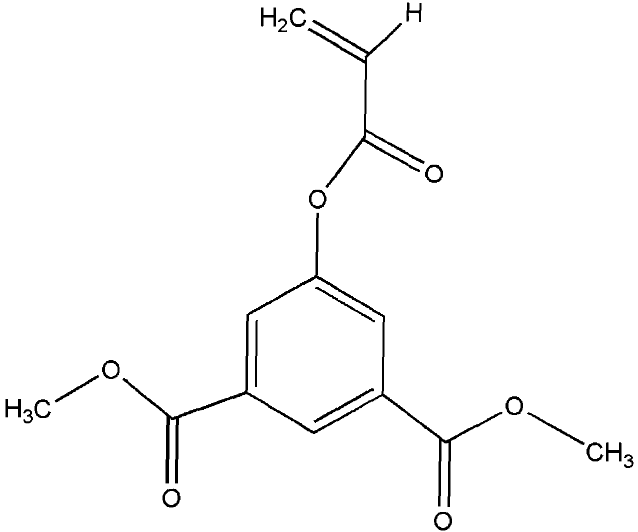

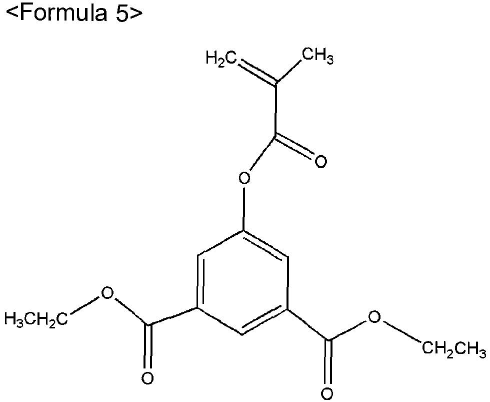

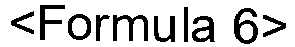

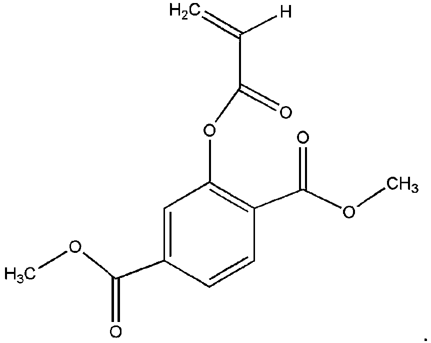

An ion conductivity of the gel-type polymer electrolyte may be 0.1 to 0.6 S/cm. The lithium metal battery including the gel-type polymer electrolyte with the ion conductivity described above may have improved high-rate characteristics and output characteristics.

The crosslinked polymer may have a lithium-substituted form.

The gel-type polymer electrolyte including the liquid electrolyte and the crosslinked polymer may be contained in pores of a porous substrate constituting the separator. In the separator having the structure described above, the liquid electrolyte is contained in a cross-linked network having a cross-linked structure, and is therefore prevented from leaking out to the outside.

The lithium metal battery according to an embodiment may further include a solid electrolyte.

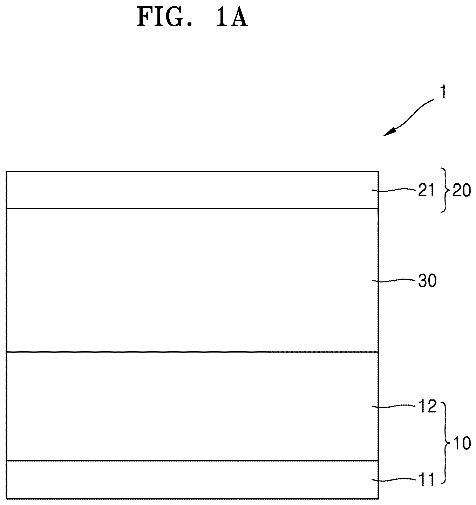

Referring to FIG. 1A,

An electrolyte layer 30 and a cathode 10 are stacked on an anode current collector 21. The anode 20 includes an anode current collector 21, and is free of an anode active material layer. The electrolyte layer 30 may include a separator.

The cathode 10 may include a cathode active material layer 12 and a cathode current collector 11.

The electrolyte layer 30 may include a gel-type polymer electrolyte.

When the electrolyte layer 30 includes a separator, a structure in which the gel-type polymer electrolyte is arranged between the separator and the cathode 10 may be provided. In another embodiment, the gel-type polymer electrolyte may not exist between the separator and the cathode, and the gel-type polymer electrolyte may exist only inside the separator. Here, the inside the separator may refer to pores. In another embodiment, a structure in which the gel-type polymer electrolyte exist on at least one side of the separator, for example, on both sides of the separator may be provided. Alternatively, the gel-type polymer electrolyte may exist between the anode current collector and the separator. When an anode active material layer such as a lithium metal layer exists on the anode current collector, the gel-type polymer electrolyte may exist between the anode active material layer and the separator.

The separator may include a porous substrate. The gel-type polymer electrolyte including the liquid electrolyte and the crosslinked polymer may be contained in pores of the separator.

The gel-type polymer electrolyte including the liquid electrolyte and the crosslinked polymer may be contained in pores of the separator including the porous substrate.

A pore diameter of the separator may be generally in a range of 0.01 µm to 10 µm, and a thickness of the separator may be generally in a range of 5 µm to 20 µm. For use as the separator, for example, an olefin-based polymer such as polypropylene, or a sheet or non-woven fabric made of glass fiber or polyethylene may be used. If a solid polymer electrolyte is used as the electrolyte, the solid polymer electrolyte may also serve as the separator.

The olefin-based polymer among the separator may include, for example, polyethylene, polypropylene, or a multi-layer film of two or more layers thereof, and examples of the multi-layer are a two-layer separator of polyethylene/polypropylene, a three-layer separator of polyethylene/polypropylene/polyethylene, a three-layer separator of polypropylene/polyethylene/polypropylene, or the like.

The gel-type polymer electrolyte may contain the liquid electrolyte, and the liquid electrolyte may contain a lithium salt and an organic solvent.

The lithium salt may include a first lithium salt and a second lithium salt. When the gel-type polymer electrolyte includes the first lithium salt and the second lithium salt, the gel-type polymer electrolyte may have improved ionic conductivity.

The first lithium salt and the second lithium salt may be a borate-based lithium salt. The borate-based lithium salt may have improved high-temperature stability compared to a phosphorus-based lithium salt, and may suppress generation of hydrofluoric acid (HF). When the first lithium salt and the second lithium salt includes borate-based lithium salts, the high-temperature cycle characteristics of a lithium battery may be improved.

The first lithium salt and the second lithium salt may each independently, for example, a fluorine-containing borate-based lithium salt. When the first lithium salt and the second lithium salt include a fluorine-containing borate-based lithium salt, a configuration of a solid electrolyte interphase (SEI) layer formed during charging and discharging of a lithium battery may be more effectively modified. For example, as an amount of fluorine (F) in the SEI layer increases, the structural stability of the SEI layer may be increased and a side reaction with the organic solvent may be effectively suppressed. Consequently, the reversibility of the electrode reaction in a lithium battery may be improved.

The first lithium salt and the second lithium salt may be, for example, a non-cyclic borate lithium salt and a cyclic borate lithium salt. When the first lithium salt is a non-cyclic lithium salt, the ion conductivity of the gel-type polymer electrolyte may be effectively increased. When the second lithium salt is a cyclic lithium salt, aggregation of anions may be increased such that the configuration of the SEI layer may be more effectively modified, thereby improving high-temperature stability of the gel-type polymer electrolyte.

When the first lithium salt is not included, the ion conductivity of the gel-type polymer electrolyte may be reduced. When the second lithium salt is not included, the structural stability of the SEI layer may be reduced.

The fluorine-containing borate-based lithium salt may include, for example, LiBF₄, LiBF₃(C₂F₅), compounds of Formulas 7 to 18, or a combination thereof:

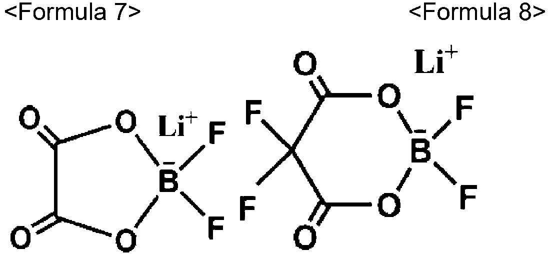

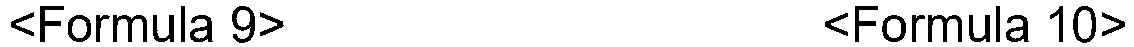

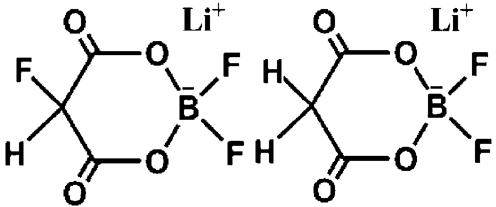

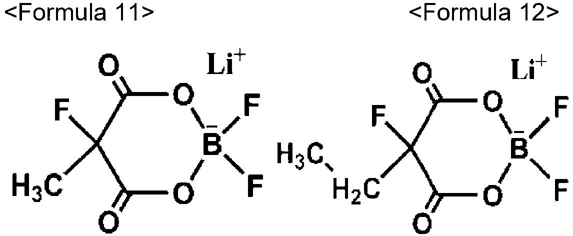

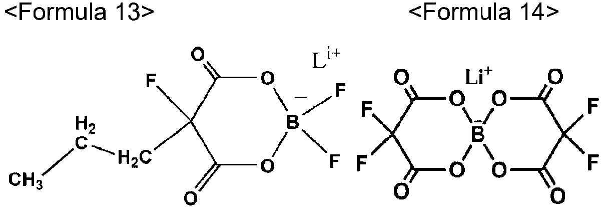

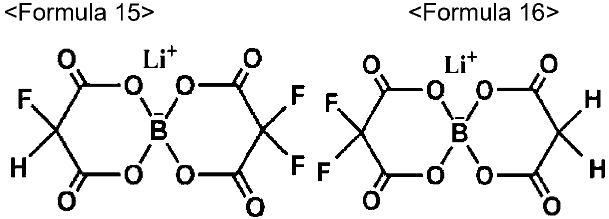

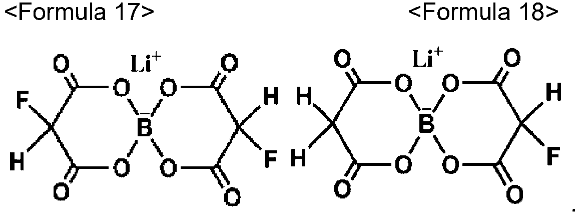

The first lithium salt may include, for example, LiBF₄, and the second lithium salt may include a compound selected from compounds of Formulae 1 to 12.

The first lithium salt may include LiBF4, and the second lithium salt may include, for example, the compound of Formula 1.

The gel-type polymer electrolyte may not, for example, include a phosphorous-based lithium salt. When the gel-type polymer electrolyte does not include a phosphorus-based lithium salt, the high-temperature stability of the gel-type polymer electrolyte may be improved, thereby suppressing generation of HF.

The gel-type polymer electrolyte may not, for example, include LiBOB. When the gel-type polymer electrolyte does not include LiBOB, the ion conductivity of the gel-type polymer electrolyte may be further improved, thereby further improving solubility of the lithium salt in a carbonate solvent.

In the gel-type polymer electrolyte, amounts of the first lithium salt and the second lithium salt may each independently, for example, greater than 0 to 1.2 M, 0.1 M to 1.0 M, or 0.4 M to 0.8 M. When the amounts of the first lithium salt and the second lithium salt are each within the ranges above, the gel-type polymer electrolyte may simultaneously provide excellent ion conductivity and structurally stable SEI layer formation.

The amounts of the first lithium salt and the second lithium salt may each independently, for example, be greater than 0 to 1.2 M, 0.1 M to 1.0 M, or 0.4 M to 0.8 M, with respect to a precursor composition for forming a gel-type polymer electrolyte before adding a first crosslinking monomer and a heat initiator.

A ratio of the amount of the first lithium salt and the amount of the second lithium salt may be, for example, 1:9 to 9:1, 3:7 to 7:3, or 4:6 to 6:4. When the ratio of the amount of the first lithium salt and the amount of the second lithium salt are within the ranges above, the gel-type polymer electrolyte may simultaneously provide excellent ion conductivity and structurally stable SEI layer formation. The ratio of the amount of the first lithium salt and the amount of the second lithium salt may be, for example, a molar ratio.

The gel-type polymer electrolyte may include a first organic solvent and a second organic solvent. When the gel-type polymer electrolyte includes the first organic solvent and the second organic solvent, the interfacial resistance between the gel-type polymer electrolyte and the cathode and/or the interfacial resistance between the gel-type polymer electrolyte and a lithium metal layer precipitated during charging may be more effectively reduced. The first organic solvent and the second organic solvent may include, for example, a carbonate-based compound. The first organic solvent and the second organic solvent may be, for example, a carbonate-based organic solvent. When the gel-type polymer electrolyte includes a carbonate-based first organic solvent and a carbonate-based second organic solvent, the first lithium salt and the second lithium salt may be easily dissolved in the organic solvent, and the viscosity of the precursor composition for forming a gel-type electrolyte may be lowered. The first organic solvent ma include, for example, a linear carbonate compound. When the first organic solvent is a linear carbonate-based solvent, the viscosity of the precursor composition before cross-linking may be lowered. In this regard, the precursor composition may become easier to handle. The second organic solvent may include, for example, a cyclic carbonate compound substituted with a substituent. The substituent of the cyclic carbonate compound may include, for example, a halogen, a cyano group (CN), a nitro group(NO₂), or a combination thereof. When the second organic solvent is a cyclic carbonate-based solvent substituted with a substituent, the first lithium salt and the second lithium salt may be more easily dissolved in the precursor composition for forming a gel-type electrolyte, and the substituent may be involved in the formation of SEI layer, thereby improving the structural stability of the SEI layer. The first organic solvent may include, for example, diethyl carbonate (DEC), dimethyl carbonate (DMC), ethyl methyl carbonate (EMC), methyl propyl carbonate, ethyl propyl carbonate, dipropylcarbonate, or a combination thereof. The second organic solvent may include, for example: vinylene carbonate substituted with one or more selected from a halogen, a cyano group (CN), and a nitro group (NO₂); vinyl ethylene carbonate substituted with one or more selected from a halogen, a cyano group (CN), and a nitro group(NO₂); fluoroethylene carbonate (FEC); fluoroethylene carbonate substituted with one or more selected from a halogen, a cyano group (CN), and a nitro group(NO₂); or a combination thereof. The first organic solvent may include, for example, DEC, and the second organic solvent may include, for example, a fluorine-substituted cyclic carbonate compound. The second organic solvent may include, for example, fluoroethylene carbonate. The gel-type polymer electrolyte may not include, for example, an unsubstituted cyclic carbonate-based solvent. When the gel-type polymer electrolyte does not include an unsubstituted cyclic carbonate solvent, the first lithium salt and the second lithium salt may be more easily dissolved in the precursor composition for forming a gel-type polymer. A volume ratio of the first organic solvent and the second organic solvent may be, for example, 5.5:4.5 to 9:1, 6:4 to 9:1, 6:4 to 8:2, or 6:4 to 7:3. When the volume ratio of the first organic solvent and the second organic solvent is within the ranges above, the composition for forming a get-type electrolyte having excellent lithium salt solubility and low viscosity may be provided. In this regard, the gel-type polymer electrolyte obtained from the composition for forming a get-type electrolyte having excellent lithium salt solubility and low viscosity may have excellent mechanical properties and improved ion conductivity.

The lithium salt may be, for example, one or more selected from LiSCN, LiN(CN)₂, LiClO₄, LiBF₄, LiAsF₆, LiPF₆, LiCF₃SO₃, LiC(CF₃SO₂)₃, LiC(FSO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃, and LiB(C₂O₄).

A concentration of the lithium salt may be, for example, 1 M to 5 M, for example, 1 M to 2.5 M. Within the ranges above, a sufficient amount of lithium ions required for charging and discharging of the lithium metal battery may be generated.

The organic solvent may be, for example, an aprotic organic solvent such as N-methyl-2-pyrrolidone, propylene carbonate, ethylene carbonate, butylene carbonate, dimethyl carbonate, diethyl carbonate, gamma-butylolactone, 1,2-dimethoxy ethane, tetrahydrofuran, 2-methyl tetrahydrofuran, dimethyl sulfoxide, 1,3-dioxolane, formamide, dimethyl formamide, dioxolane, acetonitrile, nitromethane, methyl formate, methyl acetate, phosphate triester, trimethoxy methane, a dioxolane derivative, sulfonale, methyl sulfonale, 1,3-dimethyl-2-imidazolidinone, a propylene carbonate derivative, a tetrahydrofuran derivative, ether, methyl propionate, ethyl propionate, or the like. Among the aforementioned examples, the carbonate-based solvent, such as propylene carbonate, ethylene carbonate, butylene carbonate, dimethyl carbonate, diethyl carbonate, and the like may be used.

In an embodiment, when the gel-type polymer electrolyte is present in pores of the porous substrate, the interfacial resistance between the cathode, the anode, and the separator may be minimized, thereby facilitating lithium transfer.

In another embodiment, a ceramic coating layer may be formed on both sides of the porous substrate constituting the separator.

When the ceramic coating layer is formed, the cell-performance in the lithium battery may be improved by suppressing formation of lithium dendrites through the rigidity of the ceramic coating layer, without significantly increasing the resistance of the cell. Furthermore, by employing the separator with the aforementioned ceramic coating layer, heat resistance is ensured such that heat shrinkage characteristics may be improved, and the cost of lithium battery materials is reduced by reducing the separator margin required for safety in cell design. Furthermore, the dendrite growth on the anode may be physically suppressed, thereby improving the long lifespan at room temperature and high temperatures.

The ceramic coating layer may include inorganic particles and a binder.

For use as the inorganic particles, any inorganic particles available in formation of a coating layer of the separator may be used, and examples thereof are: an inorganic oxide among SiO₂, Al₂O₃, Al(OH)₃, AIO(OH), TiO₂, BaTiO₃, ZnO₂, and Mg(OH)₂, aluminum nitride (AIN), silicon carbide (SiC), boron nitride (BoN), or a combination thereof.

The inorganic particles may be those with a dielectric constant of 5 or higher, such as BaTiO₃, BaTiO₃, Pb(Zr,Ti)O₃ (PZT), Pb₁₋ₐLaₐZr_{1-b}Ti_{b}O₃ (PLZT, 0<a<1, 0<b<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, or a combination thereof.

The ceramic coating layer may further include, in addition to the aforementioned material, inorganic particles having lithium ion transport ability, such as (LiAlTiP)ₐ₂O_{b2} glass (0<a2<4, 0<b2<13) including lithium phosphate (Li₃PO₄), lithium titanium phosphate (Li_{c}Ti_{d}(PO₄)₃, 0<d<2, 0<d<3), lithium aluminum titanium phosphate (Liₐ₁Al_{b1}Ti_{c1}(PO₄)₃, 0<a1<2, 0<b1<1, 0<c1<3), 14Li₂O-9Al₂O₃-38TiO₂-39P₂O₅, and the like, lithium germanium thiophosphate (Liₐ₄Ge_{b4}P_{c2}S_{d}, 0<a4<4, 0<b4<1, 0<c2<1, 0<d<5)including lanthanum lithium titanate (Liₐ₃La_{b3}TiO₃, 0<a3<2, 0<b3<3), Li_{3.25}Ge_{0.25}P_{0.75}S₄, and the like, lithium nitride (Liₐ₅N_{b5}, 0<a5<4, 0<b5<2) including Li₃N and the like, SiS₂ glass (Liₐ₆Si_{b6}S_{c3}, 0<a6<3, 0<b6<2, 0<c4<4) including Li₃PO₄-Li₂S-SiS₂ and the like, P₂S₅ glass (Liₐ₇P_{b7}S_{c5}, 0<a7<3, 0<b7<3, 0<c5<7) including LiI-Li₂S-P₂S₅ and the like, or a mixture thereof.

In the lithium metal battery according to an embodiment, the liquid electrolyte of the gel-type polymer electrolyte is contained within a polymer matrix, eliminating leakage, such that electrochemical side reactions at the anode and cathode, as well as electrolyte decomposition reactions, may be suppressed, thereby ensuring stability and improving battery performance.

When the gel-type polymer electrolyte exists in pores of the porous substrate, the interfacial resistance between the cathode, the anode, and the separator may be minimized, thereby facilitating lithium transfer.

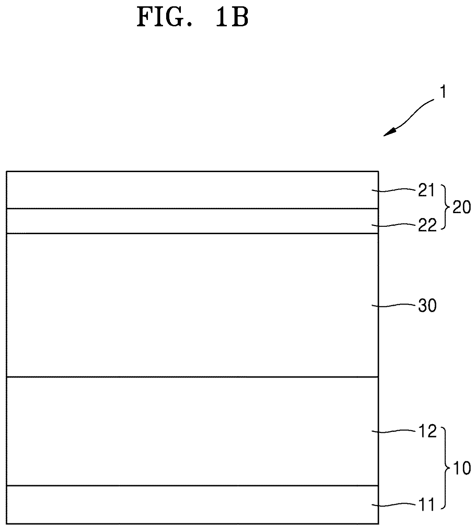

As shown in FIG. 1B, the anode active material layer 22 may be arranged between the anode current collector 21 and the separator 30.

The anode active material layer 22 may be formed by plated lithium metal. As such, the anode active material layer 22 may be a plated lithium layer. The plated lithium layer is a lithium metal layer.

The lithium metal layer may serve, for example, as a lithium reservoir. The lithium (Li) alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto. Any material alloyable with lithium in the art may be used. The lithium metal layer may consist of one of these alloys or lithium, or may consist of several types of alloys. The lithium metal layer may be, for example, a plated layer. The lithium metal layer may be, for example, plated between the electrolyte layer 30 and the anode current collector 21 during charging.

The lithium metal layer may be a metal layer including lithium or a lithium alloy. The lithium metal layer may include lithium or a lithium alloy. The lithium metal layer may serve, for example, as a lithium reservoir. The lithium (Li) alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto. Any material alloyable with lithium in the art may be used. The lithium metal layer may consist of one of these alloys or lithium, or may consist of several types of alloys. The lithium metal layer may be, for example, a plated layer. The lithium metal layer may be, for example, plated between the electrolyte layer 30 and the anode current collector 21 during charging.

A thickness of the lithium metal layer is not particularly limited, but may be, for example, 1 to 200 µm, 1 to 150 µm, 1 to 100 µm, 1 to 50 µm, 1 to 30 µm, 1 to 22 µm, or 1 µm to 10 µm. When the lithium metal layer is too thin, the lithium metal layer may have a difficulty in performing a function as a lithium reservoir. When the lithium metal layer is too thick, the volume of the lithium metal battery 1 may significantly increase, and the cycle characteristics of the lithium metal battery 1 may deteriorate.

The thickness of the lithium metal layer may be, for example, much smaller than the thickness of the cathode active material layer 12. The thickness of the lithium metal layer may be, for example, 70 % or less, 60 % or less, 50 % or less, 40 % or less, or 30 % or less than the thickness of the cathode active material layer 12.. The thickness of the lithium metal layer may be, for example, 1 to 70 %, 1 to 60 %, 1 to 50 %, 1 to 40 %, or 1 to 30 %, based on the thickness of the cathode active material layer 12. As the thickness of the lithium metal layer is reduced relative to the thickness of the cathode active material layer 12, the volume change during charging and discharging of the lithium battery 1 may be suppressed. Consequently, deterioration of the lithium metal battery 1 may be suppressed by the volume change therein.

The gel-type polymer electrolyte may effectively prevent the deterioration of the lithium battery by suppressing side reactions with the lithium metal layer during charging and discharging of the lithium battery. For example, during charging and discharging of the lithium metal battery, an SEI layer may be formed between the gel-type polymer electrolyte and the plated lithium metal layer. By modifying the configuration of the SEI layer to having increased amount of lithium salt decomposition products, side reactions between the gel-type polymer electrolyte and the lithium metal layer may be more effectively suppressed. Additionally, when the gel-type polymer electrolytes and/or the modified SEI layer effectively suppresses the growth of lithium dendrites from the lithium metal layer, a short circuit inside the lithium battery may be effectively prevented.

The separator may be arranged on the anode current collector, and the lithium metal layer may be further arranged between the anode current collector and the separator. In the X-ray photoelectron spectroscopy (XPR) on the surface of the lithium metal layer, for example, the intensity of a peak derived from a fluorine element (F) may be greater than the intensity of a peak derived from oxygen element (O). In the XPS on the surface of the lithium metal layer, for example, the intensity of a peak derived from F may be greater than 100 %, 105 % or more, 110 % or more, or 120 % or more, based on the intensity of a peak derived from O. In the XPS on the surface of the lithium metal layer, for example, the intensity of a peak derived from F may be greater 100 % to 200 %, 105 % to 200 %, 110 % to 200 % or 120 % to 200 %, based on the intensity of a peak derived from O. When the SEI layer formed on the surface of the lithium metal layer mainly includes an inorganic compound including F, the structural stability of the SEI layer may be improved. Consequently, the cycle characteristics of the lithium metal battery 1 may be improved. In contrast, when the SEI layer formed on the surface of the lithium metal layer mainly includes an organic compound including O, the structural stability of the SEI layer may be degraded. The peak derived from F may be, for example, a peak derived from 1s orbital of F. The peak derived from O may be, for example, a peak derived from 1s orbital of O.

After assembly of the lithium metal battery 1, charging causes plating of the lithium metal layer, and since the lithium metal battery 1 does not include the lithium metal layer during assembly, the energy density of the lithium metal battery 1 may increase. After assembly of the lithium metal battery 1, when charging causes additional arrangement of the lithium metal layer, the area between the anode 20, i.e., the anode current collector 21, and the electrolyte layer 30 may be a lithium (Li)-free area that does not contain Li in the initial state or after completely discharged state of the lithium metal battery 1.

Alternatively, the anode active material layer 22 may be arranged at the time of assembly of the lithium metal battery 1. A thickness of the anode active material layer 22 may be 1 to 500 µm, 3 to 500 µm 5 to 500 µm, or 10 µm to 500 µm. When the thickness of the anode active material layer 22 is within the ranges above, the lithium metal battery 1 with improved cycle characteristics without a decrease in energy density may be manufactured.

The anode active material layer 22 may include a lithium metal or a lithium alloy.

A thickness of the anode active material layer 22 may be 1 to 500 µm or 10 to 500 µm. When the thickness of the anode active material layer 22 is within the ranges above, the cycle characteristics of the lithium metal battery 1 may be improved without a decrease in energy density thereof.

When the anode active material layer 22 is arranged at the time of assembly, a carbon-based material alone, or a combination of a carbon-based material and one or more selected from a metal and a metalloid may be included.

The carbon-based material may include amorphous carbon, wherein the amorphous carbon may have an average particle diameter of 10 nm to 100 nm. The carbon-based material may include carbon black (CB), acetylene black (AB), furnace black (FB), ketjen black (KB), graphene, or a combination thereof.

The anode active material layer 22 may include a lithium metal foil, lithium metal powder, a lithium alloy foil, lithium alloy powder, or a combination thereof, and the lithium alloy may include lithium and a first metal.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

For example, the anode active material layer 22 may include lithium foil, lithium powder, or a combination thereof. The lithium foil may include, for example, lithium metal foil, a lithium alloy foil, or a combination thereof. The lithium metal may be in the form of powder, and such lithium powder may include lithium metal powder, lithium alloy powder, or a combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, or the like. The anode active material layer 22 including lithium metal foil may be, for example, a lithium metal layer. The anode active material layer 22 including lithium metal foil may be, for example, a lithium alloy layer. The anode active material layer 22 including lithium metal powder and/or lithium alloy powder may be introduced by coating the anode current collector 21 with a slurry containing lithium powder and a binder. The binder may be, for example, a fluorine-based binder such as PVDF. The anode active material layer 22 may be free of a carbon-based anode active material. In this regard, the anode active material layer 22 may consist of a metal-based anode active material.

The anode current collector may be, for example, formed of a material that does not react with lithium, that is, a material that forms neither an alloy nor a compound with lithium. A material for forming the anode current collector 21 may be, for example, Cu, stainless steel, Ti, Fe, Co, Ni, and the like, but is not limited thereto. Any material available as the electrode current collector in the art may be used. The anode current collector 21 may be formed of one of the aforementioned metals, an alloy of two or more of the aforementioned metals, or a coating material. The anode current collector 21 may be, for example, in the form of a plate or foil.

In the lithium metal battery 1 according to an embodiment, a protective layer may be additionally introduced between the anode current collector 21 and the separator. The protective layer may be additionally introduced between the anode active material layer 22 and the separator.

The protective layer may include, for example, a polymer such as polyvinyl alcohol, polyimide, a vinylidene fluoride-hexafluoropropylene copolymer, polyvinylidene fluoride, carboxymethyl cellulose, a styrene butadiene rubber, and the like, or a polymer and an inorganic filler. The inorganic filler may include, for example SiO₂, Al₂O₃, Al(OH)₃, AlO(OH), TiO₂, BaTiO₃, ZnO₂, Mg(OH)₂, AIN, SiC, BoN, or a combination thereof. As such, when the protective layer is additionally introduced, a contact between lithium and the electrolyte may be minimized, reducing side reactions, and a uniform lithium ion flow may be made throughout the electrode, thereby suppressing the lithium dendrite growth.

A thickness of protective layer may be, for example, 1 to 20 µm.

In an embodiment of the present disclosure, the cathode current collector 11 may include, for example, a base film and a metal layer arranged on one side or both sides of the base film. The base film may include, for example, a polymer. The polymer may be, for example, a thermoplastic polymer. The polymer may include, for example, PET, PE, PP, PBT, PI, or a combination thereof. When the base film includes a thermoplastic polymer, the base film may be liquefied upon the occurrence of a short circuit, and thus a rapid increase in current may be inhibited. The base film may be, for example, an insulator. The metal layer may include, for example, Cu, stainless steel, Ti, Fe, Co, Ni, or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated or deposited on the base film. When the thickness of the metal layer decreases, the limit current and/or the maximum current of the anode current collector 521b, 522b may decrease, and thus the stability of the lithium metal battery 1 may be improved. A lead tab may be added on the metal layer for the connection with the outside. The lead tab may be welded to the metal layer or a laminate of metal layer/base film by ultrasonic welding, laser welding, spot welding, or the like. The metal layer may be electrically connected to the lead tab while the base film and/or the metal layer melts during welding. A metal chip may be added between the metal layer and the lead tab for stronger welding therebetween. The metal chip may be a thin piece of the same material as the metal in the metal layer. The metal chip may be, for example, a metal foil or a metal mesh. The metal chip may be, for example, Al foil, Cu foil, or SUS foil. By welding the lead tab after disposing the metal chip on the metal layer, the lead tab may be welded to a laminate of metal chip/metal layer or a laminate of metal chip/metal layer/base film. During the welding, the metal layer or the laminate of metal substrate layer/metal chip may melt so that the metal substrate layer and/or the laminate of metal substrate layer/metal chip may be electrically connected to the lead tab. The metal chip and/or the lead tab may be added to a portion on the metal layer. A thickness of the base film may be, for example, 1 to 50 µm, 1.5 to 50 µm, 1.5 to 40 µm, or 1 to 30 µm. When the thickness of the base film is within the ranges above, the weight of an electrode assembly may be reduced more effectively. A melting point of the base film may be, for example, 100 to 300 °C, 100 to 250 °C, or 100 to 200 °C. When the melting point of the base film is within the ranges above, the base film may be melted and easily connected to the lead tab in the process of welding the lead tab. To improve the adhesion between the base film and the metal layer, a surface treatment such as a corona treatment may be performed on the base film. A thickness of the metal layer may be, for example, 0.01 to 3 µm, 0.1 to 3 µm, 0.1 to 2 µm, or 0.1 to 1µm. When the thickness of the metal layer is within the ranges above, the stability of an electrode assembly may be secured while maintaining the conductive. A thickness of the metal chip may be, for example, 2 to 10 µm, 2 to 7 µm, or 4 to 6 µm. When the thickness of the metal chip is within the ranges above, the connection between the metal layer and the lead tab may be performed more easily. When the anode current collector 21 has the aforementioned structure, the weight of the electrode may be reduced, and consequently, the energy density of the lithium metal battery 1 may be improved.

In an embodiment of the present disclosure, the cathode current collector 11 may include, for example, a base film and a metal layer arranged on one side or both sides of the base film. The base film may include, for example, a polymer. The polymer may be, for example, a thermoplastic polymer. The polymer may include, for example, PET, PE, PP, PBT, PI, or a combination thereof. When the base film includes a thermoplastic polymer, the base film may be liquefied upon the occurrence of a short circuit, and thus a rapid increase in current may be inhibited. The base film may be, for example, an insulator. The metal layer may include, for example, In, Cu, Mg, stainless steel, Ti, Fe, Co, Ni, Zn, Al, Ge, Li, or an alloy thereof. The cathode current collector 11 may further include a metal chip and/or a lead tab. Details on the base film, the metal layer, the metal chip, and the lead tab of the cathode current collector 11 may be understood by referring to the description of the anode current collector 21. When the cathode current collector 11 has the aforementioned structure, the weight of the electrode may be reduced, and consequently, the energy density of the lithium metal battery 1 may be improved.

The anode active material layer 22 may include an anode active material and a binder.

The anode active material may be, for example, in the form of particles. An average particle diameter of the anode active material in the form of particles may be, for example, 10 nm to 4 µm, 10 nm to 1 µm, 10 nm to 500 nm, 10 nm to 100 nm, or 20 nm to 80 nm. When the average particle diameter of the anode active material is within the ranges above, lithium may be more easily subjected to reversible plating and/or dissolution during charging and discharging. An average particle diameter of the anode active material may be, for example, a median diameter measured by using a laser particle size distribution meter.

The anode active material may include, for example, one or more selected from a carbon-based anode active material and a metal or metalloid anode active material. The carbon-based anode active material may be, for example, amorphous carbon. Examples of the amorphous carbon are CB, AB, FB, KB, graphene, or the like, but are not necessarily limited thereto. Any material categorized as amorphous carbon in the art may be used. The amorphous carbon may be carbon that has no or very low crystallinity, and in this regard, may be distinguished from crystalline carbon or graphite-based carbon. The metallic or metalloid anode active material may include at least one of Au, Pt, Pd, Au, Pt, Pd, Si, Ag, Al, Bi, Sn, and Zn, but is not necessarily limited thereto. Any material available as the metal or metalloid anode active material capable of forming an alloy or compound with lithium in the art may be used. For example, Ni does not form an alloy with lithium, and thus Ni is not regarded as a metallic anode active material in the present specification. Among such anode active materials, the anode active material layer 22 may include a single anode active material, or may include a mixture of a plurality of different anode active materials. The anode active material layer 22 may include, for example, a mixture of amorphous carbon with at least one metal selected from Au, Pt, Pd, Si, Ag, Al, Bi, Sn, Zn. A mixing ratio of the mixture may be a weight ratio, and for example, may be 10:1 to 1:2, 10:1 to 1:1, 7:1 to 1:1, 5:1 to 1:1, or 4:1 to 2:1. The anode active material included in the anode active material layer 22 may include, for example, a mixture of first particles consisting of amorphous carbon and second particles consisting of a metal or a metalloid. The metal may include, for example, Au, Pt, Pd, Si, Ag, Al, Bi, Sn, Zn, or the like. An amount of the second particles may be 8 to 60 wt%, 10 to 50 wt%, 15 to 40 wt%, or 20 to 30 wt%, based on the total weight of the mixture. When the amount of the second particles is within the ranges above, for example, the cycle characteristics of the lithium metal battery 1 may be further improved.

Examples of the binder included in the anode active material layer 22 may include a styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, or the like, but are not limited thereto. Any material available as the binder in the art may be used. The binder may be used alone or in a combination of a plurality of different binders. When the anode active material layer 22 does not include a binder, the anode active material layer 22 may be easily detached from a ceramic coating layer or the anode current collector 21. An amount of the binder included in the anode active material layer 22 may be, for example, 1 to 20 wt% based on the total weight of the anode active material layer 21.

In the presence of the anode active material layer 22, a thickness of the anode active material layer 22 may be, for example, 1 % to 50 %, 1 % to 30 %, 1 % to 10 %, or 1 % to 5 % of a thickness of the cathode active material layer 12. When the anode active material layer 22 is too thin, lithium dendrites formed between the anode active material layer 22 and the anode current collector 21 may cause the anode active material layer 22 to collapse, making it difficult to improve the cycle characteristics of the lithium metal battery 1. When the thickness of the anode active material layer 22 excessively increases, the lithium metal battery 1 employing the anode 20 may have a decrease in the energy density, making it difficult to improve the cycle characteristics of the lithium metal battery 1.

When the thickness of the anode active material layer 22 decreases, for example, the charge capacity of the anode active material layer 22 may also decrease. A charge capacity of the anode active material layer 22 may be, for example, 0.1 % to 50 %, 1 % to 30 %, 1 % to 10 %, 1 % to 5 %, or 1 % to 2 % based on a charge capacity. When the charge capacity of the anode active material layer 22 is excessively small, lithium dendrites formed between the anode active material layer 22 and the anode current collector 21 may cause the anode active material layer 22 to collapse, making it difficult to improve the cycle characteristics of the lithium metal battery 1. When the charge capacity of the anode active material layer 22 excessively increases, the lithium metal battery 1 employing the anode 20 may have a decrease in the energy density, making it difficult to improve the cycle characteristics of the lithium metal battery 1. A charge capacity of the cathode active material layer 12 is obtained by multiplying the charge capacity density (mAh/g) of the cathode active material by the mass of the cathode active material in the cathode active material layer 12. When several types of cathode active materials are used, the charge capacity density for each cathode active material may be multiplied by the mass, and the sum of these values is the charge capacity of the cathode active material layer 12. A charge capacity of the anode active material layer 22 may be calculated in the same way. The charge capacity of the anode active material layer 22 may be obtained by multiplying the charge capacity density (mAh/g) of the anode active material by the mass of the anode active material in the anode active material layer 22. When several types of anode active materials are used, the charge capacity density for each anode active material is multiplied by the mass, and the sum of these values is the charge capacity of the anode active material layer 22. Here, the charge capacity densities of the cathode active material and the anode active material are capacities estimated by using an all-solid-state half-cell using a lithium metal as a counter electrode. The charge capacities of the cathode active material and the anode active material may be directly measured by directly measuring the charge capacity obtained by using the all-solid-state half-cell. When the measured charge capacity is divided by the mass of each active material, the charge capacity density is obtained. Alternatively, the charge capacities of the cathode active material layer 12 and the anode active material layer 22 may be initial charge capacity measured during charging at the first cycle.

### [Lithium metal battery]

A lithium metal battery according to an embodiment may include: the cathode; the anode; and the separator arranged between the cathode and the anode. Such a lithium metal battery may provide excellent lifespan characteristics simultaneously. For example, the lithium metal battery may be a lithium primary battery, a lithium secondary battery, a lithium-sulfur battery, a lithium-air battery, etc., but is not limited thereto. Any lithium metal battery available in the art may be used.

The lithium metal battery may be, for example, prepared according to the following method, but the preparation method thereof is not limited thereto, and may be adjusted according to required conditions.

### (Cathode)

First, a cathode active material composition may be prepared by mixing a cathode active material, a conductive material, a binder, and a solvent. The prepared cathode active material composition may be directly applied onto an aluminum current collector and dried to prepare a cathode plate having a cathode active material layer formed thereon. Alternatively, the cathode active material composition may be cast on a separate support, and then a film obtained by peeling off from the support may be laminated onto the aluminum current collector to prepare a cathode plate having a cathode active material layer formed thereon.

For use as the cathode active material, any material available as the lithium-containing metal oxide in the art may be used. For example, at least one composite oxide of lithium and a metal selected from Co, Mn, Ni, and a combination thereof may be used, and a specific example thereof may be a compound represented by one of the following formulae: LiₐA₁-2 (where 0.90≤a≤1 and 0≤b≤0.5); LiₐE_{1-b}B_{b}O_{2-c}D_{c} (where 0.90≤a≤1, 0≤b≤0.5, and 0≤c≤0.05); LiE_{2-b}B_{b}O_{4-c}D_{c} (where 0≤b≤0.5 and 0≤c≤0.05); LiₐNi_{1-b-c}Co_{b}B_{c}D_{α} (where 0.90≤a≤1, 0≤b≤0.5, 0≤c≤0.05, and 0<α≤2); LiₐNi_{1-b-c}Co_{b}B_{c}O_{2-α}F_{α} (where 0.90≤a≤1, 0≤b≤0.5, 0≤c≤0.05, and 0<α≤2); LiₐNi_{1-b-c}Co_{b}B_{c}O_{2-α}F₂ (where 0.90≤a≤1, 0≤b≤0.5, 0≤c≤0.05, and 0<α<2); LiₐNi_{1-b-c}Mn_{b}B_{c}D_{α} (where 0.90≤a≤1, 0≤b≤0.5, 0≤c≤0.05, and 0<α≤2); LiₐNi_{1-b-c}Mn_{b}B_{c}O_{2-α}F_{α} (where 0.90≤a≤1, 0≤b≤0.5, 0≤c≤0.05, and 0<α<2); LiₐNi_{1-b-c}Mn_{b}B_{c}O_{2-α}F₂ (where 0.90≤a≤1, 0≤b≤0.5, 0≤c≤0.05, and 0<α<2); LiₐNi_{b}E_{c}G_{d}O₂ (where 0.90≤a≤1, 0≤b≤0.9, 0≤c≤0.5, and 0.001≤d≤0.1); LiₐNi_{b}Co_{c}Mn_{d}GeO₂ (0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (0.90 ≤ a ≤ 1 and 0.001 ≤ b ≤ 0.1); LiₐCoG_{b}O₂ (0.90 ≤ a ≤ 1 and 0.001 ≤ b ≤ 0.1); LiₐMnG_{b}O₂ (0.90 ≤ a ≤ 1 and 0.001 ≤ b ≤ 0.1); LiₐMn₂G_{b}O₄ (0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (were 0≤f≤2); Li_{(3-f)}Fe₂(PO₄)₃ (0≤f≤2); and LiFePO₄.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound in which a coating layer is additionally provided on the surface of the aforementioned compound may be also used, and a mixture of the aforementioned compound and a compound additionally provided with a coating layer may be also used. The coating layer provided on the surface of the compound may include, for example, a coating element compound, such as an oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, or the like. A detailed description of the coating method will be omitted because it may be well understood by those skilled in the art.

For example, the cathode active material may be LiₐNiₓCo_{y}M_{z}O_{2-b}A_{b} (where 1.0≤a≤1.2, 0≤b≤0.2, 0.8≤x<1, 0<y≤0.3, 0<z≤0.3, and x+y+z=1, M may be manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is F, S, Cl, Br, or a combination thereof), LiNiₓCo_{y}Mn_{z}O₂ (where 0.8≤x≤0.95, 0≤y≤0.2, 0<z≤0.2, and x+y+z=1), LiNiₓCo_{y}Al_{z}O₂ (where 0.8≤x≤0.95, 0≤y≤0.2, 0<z≤0.2, and x+y+z=1), LiNiₓCo_{y}Mn_{z}Al_{w}O₂ (where 0.8≤x≤0.95, 0≤y≤0.2, 0<z≤0.2, 0<w≤0.2, and x+y+z+w=1), LiₐCoₓM_{y}O_{2-b}A_{b} (where 1.0≤a≤1.2, 0≤b≤0.2, 0.9≤x≤1, 0≤y≤0.1, and x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), LiₐNiₓMn_{y}M'_{z}O_{2-b}A_{b} (where 1.0≤a≤1.2, 0≤b≤0.2, 0<x≤0.3, 0.5≤y<1, 0<z≤0.3, and x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof), LiₐM1ₓM2_{y}PO_{4-b}X_{b} (where 0.90≤a≤1.1, 0≤x≤0.9, 0≤y≤0.5, 0.9<x+y<1.1, and 0≤b≤2, M1 may be chromium (Cr), manganese (Mn), iron (Fe), cobalt (Co), nickel (Ni), copper (Cu), zirconium (Zr), or a combination thereof, and M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof), or LiₐM3_{z}PO₄ (where 0.90≤a≤1.1 and 0.9≤z≤1.1, and M3 may be chromium (Cr), manganese (Mn), iron (Fe), cobalt (Co), nickel (Ni), copper (Cu), zirconium (Zr), or a combination thereof).

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and the like; and a conductive polymer such as a polyphenylene derivative. However, embodiments are not limited thereto, and any suitable conductive material available in the art may be used. Alternatively, the cathode may not include, for example, a separate conductive material.

Examples of the binder are a vinylidene fluoride/hexafluoropropylene copolymer, polyvinylidene fluoride, polyacrylonitrile, polymethyl methacrylate, PTFE, a mixture of the aforementioned polymers, a styrene butadiene-rubber polymer, and the like, and examples of the solvent are N-methyl pyrrolidone (NMP), acetone, water, and the like. However, embodiments are not limited thereto, and any suitable binder and solvent available in the art may be used.

A plasticizer or a pore-forming agent may be added to the cathode active material composition to form pores in an electrode plate.

Amounts of the cathode active material, the conductive material, the binder, and the solvent used in the cathode may be at levels general for use in a lithium battery. Depending on the intended use and composition of the lithium metal battery, one or more of the conductive material, the binder, and the solvent may be omitted.

An amount of the binder included in the cathode may be 0.1 wt% to 10 wt% or 0.1 wt% to 5 wt%, based on the total weight of the cathode active material layer. An amount of the cathode active material included in the cathode may be 80 wt% to 99 wt%, 90 wt% to 99 wt%, or 95 wt% to 99 wt%, based on the total weight of the cathode active material layer.

The cathode current collector may use, for example, a plate or a foil, each consisting of In, Cu, Mg, stainless steel, Ti, Fe, Co, Ni, Zn, a plate or foil made of aluminum (Al), germanium (Ge), lithium (Li) or an alloy thereof. The cathode current collector may be omitted. A thickness of the cathode current collector may be, for example, 1 µm to 100 µm, 1 µm to 50µm, 5 µm to 25 µm, or 10 µm to 20 µm.

The cathode current collector may include, for example, a base film and a metal layer arranged on one side or both sides of the base film. The base film may include, for example, a polymer. The polymer may include, for example, polyethylene terephthalate (PET), polyethylene (PE), polypropylene (PP), polybutylene terephthalate (PBT), polyimide (PI), or a combination thereof. The metal layer may include, for example, In, Cu, Mg, stainless steel, Ti, Fe, Co, Ni, Zn, Al, Ge, Li, or an alloy thereof. If the cathode current collector has the aforementioned structure, the weight of the electrode may be reduced, and consequently, the energy density of the lithium metal battery may be improved.

### (Separator)

Next, a separator to be inserted between the cathode and the anode is prepared.

For use as the separator, any separator commonly used in lithium batteries may be used. For use as the separator, for example, a separator exhibiting low resistance to the movement of ions in the electrolyte and excellent electrolyte solution-retaining ability may be used. For example, the separator may be in the form of non-woven fabric or woven fabric, each being formed of a material selected from glass fiber, polyester, Teflon, polyethylene, polypropylene, polytetrafluoroethylene (PTFE), or a combination thereof. For example, in a lithium ion battery, a rollable separator formed of polyethylene, polypropylene, or the like, may be used, and in a lithium ion polymer battery, a separator having excellent organic electrolyte solution-retaining ability may be used.

The separator may be, for example, prepared according to the following example method, but the preparation method thereof is not limited thereto, and may be adjusted according to required conditions.

First, a polymer resin, a filler, and a solvent are mixed to prepare a separator composition. The separator composition may be directly applied onto an electrode, and then dried, so as to form a separator. Alternatively, after casting a support with the separator composition and drying it, a separator film peeled off from the support may be laminated onto an electrode, so as to prepare a separator.

Types of a polymer used in the separator preparation may not be limited, and any material available as the polymer used for the binder in an electrode plate may be used. For example, a vinylidene fluoride/hexafluoropropylene copolymer, polyvinylidene fluoride (PVDF), polyacrylonitrile, polymethyl methacrylate, or a mixture thereof may be used.

### (Anode)

The anode may include an anode current collector.

In an embodiment of the present disclosure, the anode current collector may include, for example, a base film and a metal layer disposed on one side or both sides of the base film. The base film may include, for example, a polymer. The polymer may be, for example, a thermoplastic polymer. The polymer may include, for example, PET, PE, PP, PBT, PI, or a combination thereof. When the base film includes a thermoplastic polymer, the base film may be liquefied upon the occurrence of a short circuit, and thus a rapid increase in current may be inhibited. The base film may be, for example, an insulator. The metal layer may include, for example, Cu, stainless steel, Ti, Fe, Co, Ni, or an alloy thereof. The metal layer may act as an electrochemical fuse, and thus may be cut in the event of an overcurrent to perform a short circuit prevention function. By adjusting the thickness of the metal layer, a limit current and a maximum current may be adjusted. The metal layer may be plated or deposited on the base film. When the thickness of the metal layer decreases, the limit current and/or the maximum current of the anode current collector may decrease, and thus the stability of a lithium metal battery may be improved. A lead tab may be added on the metal layer for the connection with the outside. The lead tab may be welded to the metal layer or a laminate of metal layer/base film by ultrasonic welding, laser welding, spot welding, or the like. The metal layer may be electrically connected to the lead tab while the base film and/or the metal layer melts during welding. A metal chip may be added between the metal layer and the lead tab for stronger welding therebetween. The metal chip may be a thin piece of the same material as the metal in the metal layer. The metal chip may be, for example, a metal foil or a metal mesh. The metal chip may be, for example, an Al foil, a Cu foil, or an SUS foil. By welding the lead tab after disposing the metal chip on the metal layer, the lead tab may be welded to a laminate of metal chip/metal layer or a laminate of metal chip/metal layer/base film. During the welding, the metal layer or the laminate of metal substrate layer/metal chip may melt so that the metal substrate layer and/or the laminate of metal substrate layer/metal chip may be electrically connected to the lead tab. The metal chip and/or the lead tab may be added to a portion on the metal layer. A thickness of the base film may be, for example, 1 to 50 µm, 1.5 to 50 µm, 1.5 to 40 µm, or 1 to 30 µm. When the thickness of the base film is within the ranges above, the weight of an electrode assembly may be reduced more effectively. A melting point of the base film may be, for example, 100 to 300 °C, 100 to 250 °C, or 100 to 200 °C. When the melting point of the base film is within the ranges above, the base film may be melted and easily connected to the lead tab in the process of welding the lead tab. To improve the adhesion between the base film and the metal layer, a surface treatment such as a corona treatment may be performed on the base film. A thickness of the metal layer may be, for example, 0.01 µm to 3 µm, 0.1 µm to 3 µm, 0.1 µm to 2 µm, or 0.1 to 1 µm. When the thickness of the metal layer is within the ranges above, the stability of an electrode assembly may be secured while maintaining the conductive. A thickness of the metal chip may be, for example, 2 µm to 10 µm, 2 µm to 7 µm, or 4 µm to 6 µm. When the thickness of the metal chip is within the ranges above, the connection between the metal layer and the lead tab may be performed more easily. When the anode current collector 521b, 522b has the aforementioned structure, the weight of an electrode may be reduced, thereby improving the energy density.

An anode active material layer may be formed on the anode current collector. The anode active material layer may be formed as a lithium plated layer after charging. Alternatively, the anode active material layer may be formed by using an anode active material during the battery assembly.

A process of preparing the anode active material layer by using an anode active material may be the same as the process of preparing the cathode active material layer, except that an anode active material is used instead of a cathode active material in forming the cathode active material layer.

The lithium metal battery may further include, for example, a thin film including an element capable of forming an alloy with lithium on one surface of the anode current collector. The thin film may be arranged between the anode current collector and the anode active material layer. The thin film may include, for example, an element capable of forming an alloy with Li. The element capable of forming an alloy with lithium may include, for example, Au, Ag, Zn, Ti, In, Si, Al, Bi, or the like, but is not necessarily limited thereto. Any material available as the element capable of forming an alloy with lithium in the art may be used. The thin film may be formed of one of these metals or an alloy of several types of metals. Due to the thin film disposed on one surface of the anode current collector, for example, the plated form of a first anode active material layer plated between the thin film and the anode active material layer may be further flattened, thereby further improving the cycle characteristics of the lithium metal battery.

### (Separator)

The separator according to an embodiment may be used.

The organic electrolyte solution may be, for example, prepared by dissolving a lithium salt in an organic solvent.

For use as the organic solvent, any material available as the organic solvent in the art may be used. Examples of the organic solvent are propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof. organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof.

For use as the lithium salt, any material available as the lithium salt in the art may be also used. Examples of the lithium salt may include LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where 1≤x≤20 and 1≤y≤20), LiCl, Lil, or a mixture thereof. A concentration of the lithium salt may be, for example, 0.1 M to 5.0 M.

The lithium metal battery according to an embodiment may further include a solid electrolyte, a liquid electrolyte, or a combination thereof. The solid electrolyte may be, for example, an oxide-based solid electrolyte, a sulfide-based solid electrolyte, or a combination thereof.

The solid electrolyte may be, for example, an oxide-based solid electrolyte. The oxide-based solid electrolyte may include at least one of Li_{1+x+y}AlₓTi₂₋ₓSi_{y}P_{3-y}O₁₂ (where 0<x<2 and 0≤y<3), Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from Li₇La₃Zr₂O₁₂(LLZO) and Li₃₊ₓLa₃Zr₂₋ₐMₐO₁₂ (M-doped LLZO)(where M may be Ga, W, Nb, Ta, or Al, x may be an integer from 1 to 10, and 0<a<2).

The sulfide-based solid electrolyte may include, for example, lithium sulfide, silicon sulfide, phosphorus sulfide, boron sulfide, or a combination thereof. Particles of the sulfide-based solid electrolyte may include Li₂S, P₂S₅, SiS₂, GeS₂, B₂S₃, or a combination thereof. The particles of the sulfide-based solid electrolyte particles may include Li₂S or P₂S₅. The particles of the sulfide-based solid electrolyte are known to have higher lithium ion conductivity than other inorganic compounds. For example, the sulfide-based solid electrolyte may include Li₂S and P₂S₅. When the sulfide solid electrolyte material constituting the sulfide-based solid electrolyte includes Li₂S-P₂S₅, a mixing molar ratio of Li₂S to P₂S₅ may be, for example, in a range of about 50:50 to about 90:10. In addition, an inorganic solid electrolyte prepared by adding Li₃PO₄, halogen, a halogen compound, Li₂₊₂ₓZn₁₋ₓGeO₄ ("LISICON")(where 0≤x<1), Li_{3+y}PO₄₋ₓNₓ ("LIPON")(where 0<x<4 and 0<y<3), Li_{3.25}Ge_{0.25}P_{0.75}S₄("ThioLISICON"), Li₂O-Al₂O₃-TiO₂-P₂O₅ ("LATP"), or the like to an inorganic solid electrolyte, such as Li₂S-P₂S₅, SiS₂, GeS₂, B₂S₃, or a combination thereof, may be used as the sulfide solid electrolyte. Non-limiting examples of the sulfide solid electrolyte material are: Li₂S-P₂S₅; Li₂S-P₂S₅-LiX (where X may be a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S -P₂S₅-ZₘSₙ (where 0<m<10, 0<n<10, and Z may be Ge, Zn, or Ga); Li₂S-GeS₂; Li₂S-SiS₂-Li₃PO₄; and Li₂S-SiS₂-LiₚMO_{q} (where 0<p<10, 0<q<10, and M may be P, Si, Ge, B, Al, Ga, or In). In this regard, the sulfide-based solid electrolyte material may be prepared by treating raw starting materials of the sulfide-based solid electrolyte material (e.g., Li₂S, P₂S₅, etc.) by a melt quenching method, a mechanical milling method, and the like. In addition, a calcination process may be performed after the treatment. The sulfide-based solid electrolyte may be amorphous or crystalline, or may be in a mixed state.

The sulfide-based solid electrolyte may include, for example, one or more selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-LiI, Li₂S-B₂S₃, Li₂S-P₂S₅-ZₘSₙ (where m and n are positive numbers, and Z is one of Ge, Zn and Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, and In), Li₇₋ₓPS₆₋ₓClₓ (0<x<2), Li₇₋ₓPS₆₋ₓBrₓ (0<x<2), and Li₇₋ₓPS₆₋ₓIₓ (0<x<2).

### (Lithium metal battery)

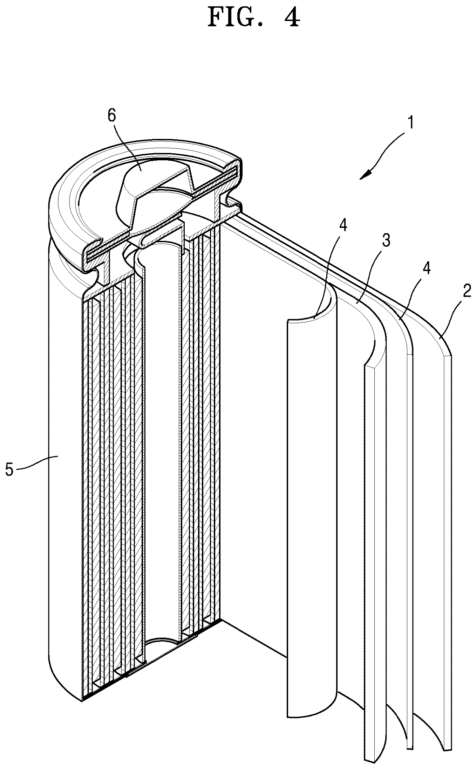

Referring to FIG. 4, the lithium metal battery 1 according to an embodiment includes a cathode 3, an anode 2, and an electrolyte layer 4. The electrolyte layer 4 includes a separator. A gel-type polymer electrolyte (not shown) may be arranged between the separator and the cathode 2. The cathode 3, the anode 2, and the separator as the electrolyte layer 4 may be wound or folded to form a battery structure 7. The formed battery structure 7 may be accommodated in a battery case 5. Then, the battery case 5 may be filled with an organic electrolyte solution, and then sealed with a cap assembly, thereby completing the manufacture of the lithium metal battery 1. The battery case 5 may be a cylindrical-type, but the shape of the battery case 5 is not limited thereto. For example, the battery case 5 may be a square-type, a thin-film type, or the like.

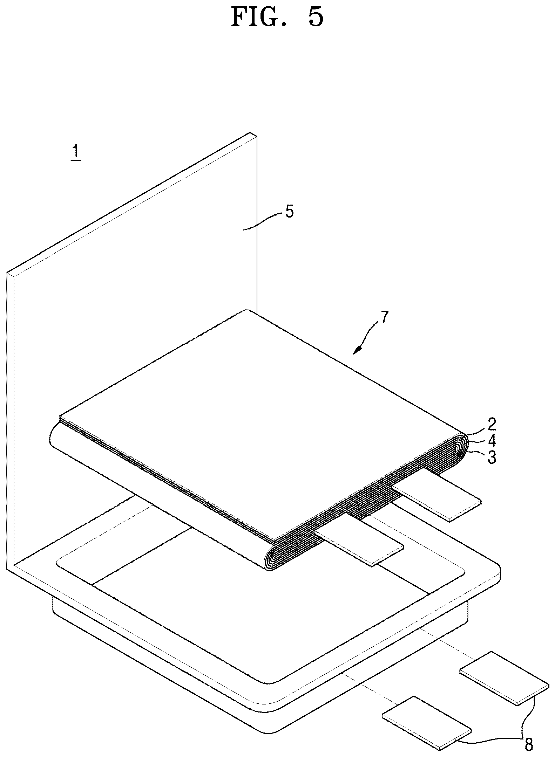

Referring to FIG. 5, the lithium metal battery 1 according to an embodiment includes a cathode 3, an anode 2, and an electrolyte layer 4. The electrolyte layer 4 includes a separator. The electrolyte layer 4 may be arranged between the cathode 3 and the anode 2, and the cathode 3, the anode 2, and the electrolyte layer 4 may be wound or folded to form a battery structure 7. The formed battery structure 7 may be accommodated in a battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

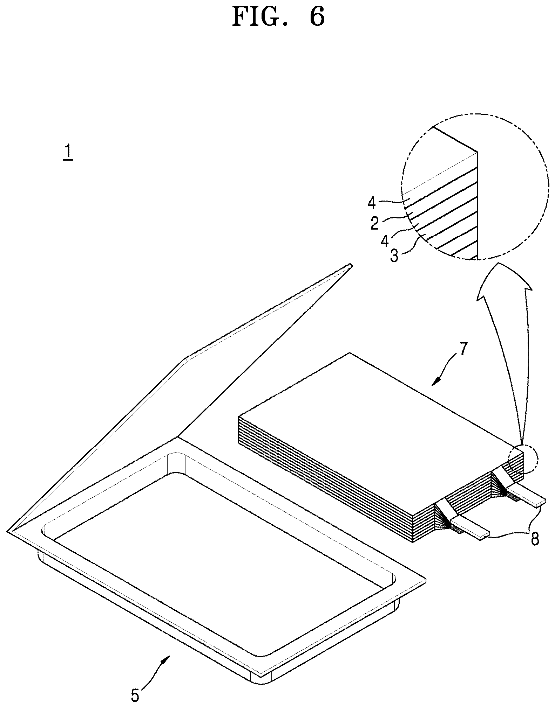

Referring to FIG. 6, the lithium metal battery 1 according to an embodiment includes a cathode 3, the anode 2 according to an embodiment, and an electrolyte layer 4. The electrolyte layer 4 includes a separator. The separator as the electrolyte layer 4 may be arranged between the cathode 3 and the anode 2 to form a battery structure 7. A gel-type polymer electrolyte between a separator and the cathode may not be illustrated in the drawing. The battery structure 7 may be laminated in a bi-cell structure, and then accommodated in the battery case 5. The lithium secondary battery 1 may include electrode tabs 8 serving as an electrical path for inducing a current formed in the battery structure 7 to the outside. Then, the battery case 5 may be filled with an organic electrolyte solution, and then sealed, thereby completing the manufacture of the lithium metal battery 1. The battery case 5 may be a square-type, but the shape of the battery case 5 is not limited thereto. For example, the battery case 5 may be a cylindrical-type, a thin-film type, or the like.

A pouch-type lithium metal battery corresponds to use of a pouch as a battery case for each of the lithium batteries of FIGS. 5 and 6. A pouch-type lithium metal battery may include one or more battery structures. The separator may be arranged between the cathode 3 and the anode 2 to form the battery structure 7. The battery structure 7 may be stacked as a bi-cell structure, impregnated with an organic electrolyte solution, and accommodated and sealed in a pouch, thereby completing the manufacture of a pouch-type lithium battery. Although not illustrated in the drawings, the cathode 3, anode 2, and the separator may be simply stacked in the form of an electrode assembly and then accommodated in a pouch, or may be wound or folded into a jelly roll-type electrode assembly and then accommodated in a pouch. Then, after injecting an organic electrolyte solution into the pouch, and the pouch may be sealed, thereby completing the manufacture of the lithium metal battery.

The lithium metal battery of the present disclosure may have excellent discharge capacity and lifespan characteristics, and may also have high energy density, and thus may be, for example, used in an electric vehicle (EV). For example, the lithium metal battery may be used in a hybrid vehicle, such as a plug-in hybrid electric vehicle (PHEV) or the like. The lithium metal battery may also be applicable to the fields requiring high-power storage. For example, the lithium metal battery may be used in an electric bicycle, a power tool, or the like.

Multiple units of the lithium metal battery may be laminated to form a battery module, and multiple units of such a battery module may form a battery pack. The battery pack may be used in a device that requires high capacity and large output. For example, the battery pack may be used in a laptop computer, a smart phone, an electronic vehicle, or the like. The battery module may include, for example, multiple batteries and a frame that holds the multiple batteries. The battery pack may include, for example, multiple battery modules and a bus bar that connects the battery modules together. The battery module and/or the battery pact may further include a cooling device. The multiple battery packs may be managed by a battery management system. The battery management system may include a battery pack and an electronic control device connected to the battery pack.

### [Manufacturing method for lithium metal battery]

A manufacturing method for the lithium metal battery according to an embodiment includes: preparing an anode current collector; preparing a separator; preparing a cathode; stacking the anode current collector, the separator, and the cathode to prepare an assembly; injecting a composition for forming a gel-type polymer electrolyte to the assembly; and cross-linking the injected composition for forming a gel-type polymer electrolyte to prepare a lithium metal battery including a gel-type polymer electrolyte.

The composition for forming a gel-type polymer electrolyte may include: a multifunctional polymerizable monomer; one or more selected from a compound represented by Formula 1 and a compound represented by Formula 1-1; a liquid electrolyte; and an initiator: 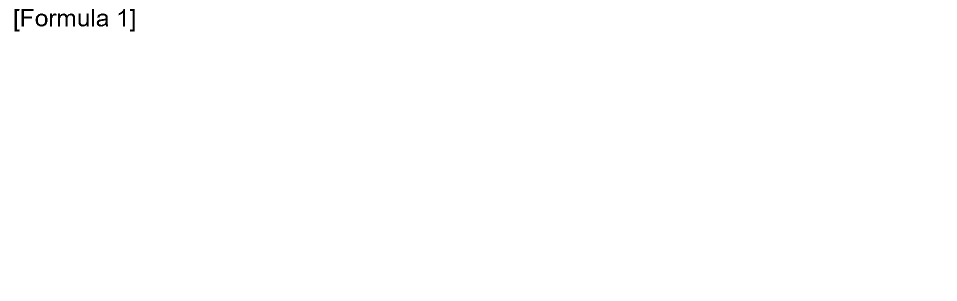 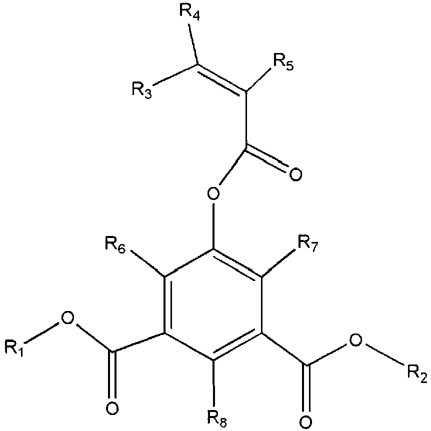
[254] wherein, in Formula 1, R₁ and R₂ are a C1-C30 alkyl group or a C6-C30 aryl group,
[255] R₃ to R₅ are each independently hydrogen or a C1-C30 alkyl group, and
[256] R₆ to R₈ are each independently hydrogen, a C1-C30 alkyl group, or a C6-C30 aryl group: 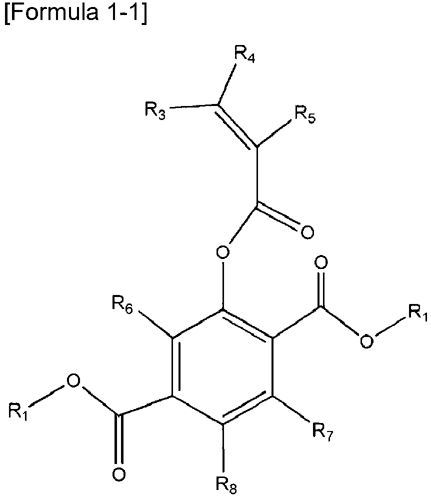
wherein, in Formula 1-1, R₁ and R₂ may be a C1-C30 alkyl group or a C6-C30 aryl group,
R₃ to R₅ may each independently be hydrogen or a C1-C30 alkyl group, and
R₆ to R₈ may each independently be hydrogen, a C1-C30 alkyl group, or a C6-C30 aryl group.

The injecting of the composition for forming a gel-type polymer electrolyte into the assembly may be performed under vacuum such that the composition may undergo impregnation process to sufficiently penetrate into the pores of the porous substrate.

Methods for forming a gel-type polymer electrolyte may include curing using heat, ultraviolet (UV) rays, or high-energy radiation (electron beams, γ-rays). Curing using heat may be carried out at temperatures ranging from 40 to 120 °C, for example, at 50 to 90 °C for 30 to 120 minutes.

Such heat treatment may vary depending on the kind of (meth)acrylic compounds including multifunctional crosslinking agents with three or more functional groups and polyethylene glycol moieties, but may be carried out at temperatures ranging from 40 to 120 °C.

The multifunctional crosslinking agent with three or more functional groups may have a weight average molecular weight of 200 to 2,000, 200 to 1,000, and for example, 200 to 600. A weight average molecular weight of the (meth)acrylic compound including the polyethylene glycol moiety may be 300 to 600. When the weight average molecular weight of the (meth)acrylic compound having three or more functional groups and polyethylene glycol moieties is less than the ranges above, the density of cross-linking points in the molecular structure of the crosslinked polymer may be too high, preventing the free movement of lithium salts. When the weight average molecular weight is greater than the ranges above, the density of cross-linking points in the polymer molecular structure after crosslinking may be too low, resulting in reduced electrolyte barrier properties.

An content of the (meth)acrylic compound including three or more functional groups as a crosslinking agents and polyethylene glycol moieties, which are monomers for forming a crosslinked polymer, may be 1 to 10 parts by weight, 2 to 8 parts by weight, 3 to 7 parts by weight, based on 100 parts by weight of the composition for forming a gel-type polymer electrolyte. When the total amount of the monomer for forming a crosslinked polymer is less than the ranges above, the degree of crosslinking during crosslinking is too low to sufficiently exhibit the characteristics of crosslinking, and the electrolyte impregnation capacity and mechanical properties may be poor. When the total amount exceeds the ranges above, the internal resistance within the electrode plate increases, causing a decrease in capacity during high-rate charging and discharging.

The composition for forming a gel-type polymer electrolyte may further include a crosslinking agent, a photoinitiator, and the like in terms of assisting crosslinking of the crosslinkable monomer. For use as a crosslinking agent or an initiator, any material generally used in the art may be used without specific limitation.

The initiator may be, for example, benzoin ethyl ether.

Amounts of the crosslinking agent and the initiator used may be within a normal range. An amount of the initiator may be, for example, in a range of 0.1 to 5 parts by weight or 0.2 to 3 parts by weight, based on 100 parts by weight of the total amount of the monomer for forming a crosslinked polymer. Using the gel-type polymer electrolyte thus formed, the ion conductivity may be maintained at a value close to that of the liquid electrolyte, while the gel-type polymer electrolyte inside the anode and cathode may prevent leakage of the liquid electrolyte. The electrolyte may be trapped in a polymer matrix of the gel-type polymer electrolyte and maintained within the polymer matrix, thereby facilitating the smooth movement of lithium ions. In addition, due to excellent electrochemical properties of the polymer, the electrolyte decomposition may be suppressed within a range of -1 V to 5 V.

In the composition for forming a gel-type polymer electrolyte, a weight ratio of the multifunctional polymerizable monomer to the compound of Formula 1 may be 30:1 to 2:1. Using the composition for forming a gel-type polymer electrolyte having such a mixed weight ratio, a gel-type polymer electrolyte with reduced interfacial resistance and bulk resistance may be provided.

An ionic conductivity of the gel-type polymer electrolytes according to an embodiment may be 0.26 mS/cm or more, for example, 0.26 to 1.0 mS/cm or 0.3 to 1.0 mS/cm.

In the present specification, the term "alkyl group" refers to a branched or unbranched aliphatic hydrocarbon group. In an embodiment, the alkyl group may be in a substituted state or an unsubstituted state. Examples of the alkyl group are a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and the like, but embodiments are not limited thereto. Each of these substituents may be selectively substituted. In another embodiment, the alkyl group may include 1 carbon atom to 6 carbon atoms. Examples of the C₁-C₆ alkyl group are a methyl group, an ethyl group, a propyl group, an isopropyl group, a butyl group, an isobutyl group, a sec-butyl group, a pentyl group, a 3-pentyl group, a hexyl group, and the like, but embodiments are not limited thereto.

At least one hydrogen atom of the alkyl group may be substituted with a halogen atom, a C₁-C₂₀ alkyl group substituted with halogen atom (e.g., CF₃, CHF₂, CH₂F, CCl₃, etc.), a C1-C20 alkoxy group, a C2-C20 alkoxyalkyl group, a hydroxy group, a nitro group, a cyano group, an amino group, an amidino group, a hydrazine group, a hydrazone group, a carboxyl group or a salt thereof, a sulfonyl group, a sulfamoyl group, a sulfonic acid group or a salt thereof, a phosphoric acid group or a salt thereof, or a C1-C20 alkyl group, a C2-C20 alkenyl group, a C2-C20 alkynyl group, a C1-C20 heteroalkyl group, a C6-C20 aryl group, a C7-C20 arylalkyl group, a C6-C20 heteroaryl group, a C7-C20 heteroarylalkyl group, a C6-C20 heteroaryloxy group, or a C6-C20 heteroaryloxyalkyl group.

In the present specification, the term "alkenyl group" refers to a C2-C20 hydrocarbon group including at least one carbon-carbon double bond, and examples thereof are an ethenyl group, a 1-prophenyl group, a 2-prophenyl group, a 2-methyl-1-prophenyl group, a 1-butenyl group, a 2-butenyl group, a cycloprophenyl group, a cyclopentenyl group, a cyclohexenyl group, a cyclopentenyl group, and the like. However, embodiments are not limited thereto. In another embodiment, the alkenyl group may be in a substituted state or an unsubstituted state. In another embodiment, the alkenyl group may include 2 carbon atoms to 40 carbon atoms.

In the present specification, the term "alkynyl group" refers to a C2-C20 hydrocarbon group including at least one carbon-carbon triple bond, and examples thereof are an ethyny group, a 1-propynyl group, a 1-butynyl group, a 2-butynyl group, and the like. However, embodiments are not limited thereto. In another embodiment, the alkynyl group may be in a substituted state or an unsubstituted state. In another embodiment, the alkynyl group may include 2 carbon atoms to 40 carbon atoms.

The term "halogen" may include fluorine, bromine, chlorine, iodine, and the like.

The term "alkoxy" refers to "alkyl-O-", wherein the alkyl is the same as defined above. Examples of the alkoxy group are a methoxy group, an ethoxy group, a 2-propoxy group, a butoxy group, a t-butoxy group, a pentyloxy group, a hexyloxy group, and the like. At least one hydrogen atom of the alkoxy group may be substituted with the same substituents as in the case of the aforementioned alkyl group.

The term "heteroaryl" refers to a monocyclic or bicyclic organic group including at least one hetero atom selected from N, O, P, and S and carbon atoms as the remaining ring atoms. The heteroaryl group may include, for example, 1 hetero atom to 5 hetero atoms and 5 ring members to 10 ring members. Here, S or N may be oxidized and then have several oxidation states.

Examples of the heteroaryl are thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, a 1,3,4-oxadiazolyl group, 1,2,3-thiadiazolyl, 1,2,4-thiadiazolyl, 1,2,5-thiadiazolyl, 1,3,4-thiadiazolyl, isothiazole-3-yl, isothiazole-4-yl, isothiazole-5-yl, oxazole-2-yl, oxazole-4-yl, oxazole-5-yl, isooxazole-3-yl, isooxazole-4-yl, isooxazole-5-yl, 1,2,4-triazole-3-yl, 1,2,4-triazole-5-yl, 1,2,3-triazole-4-yl, 1,2,3-triazole-5-yl, tetrazolyl, pyrid-2-yl, pyrid-3-yl, 2-pyrazine-2-yl, pyrazine-4-yl, pyrazine-5-yl, 2- pyrimidine-2-yl, 4- pyrimidine-2-yl, 5-pyrimidine-2-yl, and the like.

The term "heteroaryl" refers to a heteroaromatic ring optionally fused to at least one aryl, cycloaliphatic, or heterocycle.

The term "carbon ring" refers to a non-aromatic monocyclic hydrocarbon group, a bicyclic hydrocarbon group, or a tricyclic hydrocarbon group, each being saturated or partially unsaturated.

Examples of the monocyclic hydrocarbon are cyclopentyl, cyclopentenyl, cyclohexyl, cyclohexenyl, and the like.

Examples the bicyclic hydrocarbon are bornyl, decahydronaphthyl, bicyclo[2.1.1]hexyl, bicyclo[2.2.1]heptyl, bicyclo[2.2.1]heptenyl, bicyclo[2.2.2]octyl, and the like.

Examples of the tricyclic hydrocarbon are adamantyl and the like.

At least one hydrogen atom of the carbon ring may be substituted with the same substituents as in the case of the aforementioned alkyl group.

In the present specification, the term "aryl" refers to a monocyclic or bicyclic carbon organic group. Examples of the aryl group are a phenyl group, a naphthyl group, a biphenyl group, a fluorene group, a spirofluorene group, and the like.

In the present specification, unless otherwise defined, the term "substitution" refers to substitution with a halogen group, a cyano group, a C1-C30 alkyl group, a C3-C30 cycloalkyl group, a C6-C30 aryl group, a C1-C30 alkoxy group, or a combination thereof.

In the present specification, unless otherwise defined, the term "substitution" refers to substitution with a halogen group, a cyano group, a C1-C30 alkyl group, a C3-C30 cycloalkyl group, a C6-C30 aryl group, a C1-C30 alkoxy group, or a combination thereof.

Hereinafter, the present creative idea will be described in more detail through Examples and Comparative Examples below. However, these examples are provided to represent the creative idea, and the scope of the present creative idea is not limited thereto.

### Preparation Example 1: Preparation of DMI-Ac

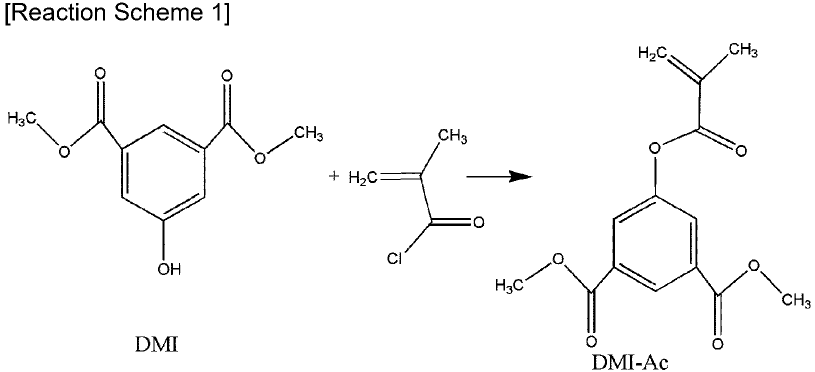

5-hydroxyl dimethyl isophthalate (DMI) and acryloyl chloride were mixed and reacted at 80 °C for 120 minutes to obtain DMI-Ac.

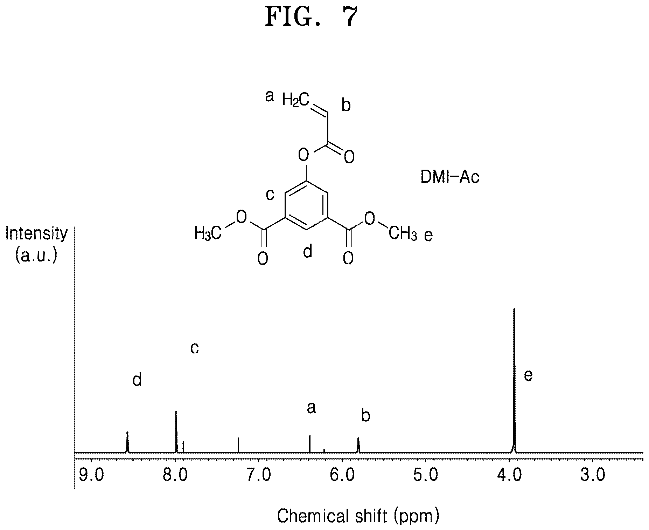

The structure DMI-Ac was identified by NMR in FIG. 7.

### Example 1: TMPTA/DMI-AC(2.9:0.1) crosslinked polymer 3 %

A 20 µm-thick polyethylene single layer as a separator was stacked on a 10 µm-thick copper foil as an anode current collector, and a cathode was stacked on the other side of the separator to manufacture a stacked structure. A composition for forming a gel-type polymer electrolyte was injected into the manufactured stacked structure, which was then heat-crosslinked in an oven at 70 °C for 2 hours to produce a lithium metal battery including a gel-type polymer electrolyte.

The lithium metal battery had a cathode/gel-type polymer electrolyte(separator)/anode current collector structure. In addition, in pores of the separator, the gel-type polymer electrolyte was present.

The composition for forming a gel polymer electrolyte was prepared by mixing trimethylolpropane triacrylate (TMPTA), which is a multifunctional crosslinking agent including at least three functional groups, DMI-Ac of Preparation Example 1, a liquid electrolyte, and benzoin ethyl ether (Sigma-Aldrich, 240.30 g/mol) as an initiator.

For use as the liquid electrolyte, a solution in which 0.6 M of LiBF₄ and 0.6 M of lithium difluoro(oxalate)borate (LiDFOB) were added to a mixed solvent of diethyl carbonate (DEC) and fluoroethylene carbonate (FEC) mixed at a volume ratio of 2:1 was used.

Based on 100 parts by weight of the total weight of the composition, 2.9 parts by weight of TMPTA, 0.1 parts by weight of DMI-AC, and 97 parts by weight of liquid electrolyte were used. Based on 100 parts by weight of the total weight of TMPTA and DMI-AC, 3 parts by weight of the initiator was used.

Here, the mixing weight ratio of TMPTA and DMI-AC was 2.9:0.1.

The cathode was prepared by the following method.

Li_{1.04}Ni_{0.88}Co_{0.1}Al_{0.02}O₂ powder and a carbon-based conductive material (Super-P; Timcal Ltd.)were uniformly mixed at a weight ratio of 90:5, and a polyvinylidene fluoride (PVDF) binder solution was added thereto to prepare a cathode active material slurry in which a weight ratio of active material:carbon-based conductive material:binder was 90:5:5.

The slurry thus prepared was applied onto a 15 µm-thick-aluminum substrate by using a doctor blade, dried at 120 °C under reduced pressure, and then rolled into a sheet form by using a roll press, so as to manufacture a sheet-type cathode.

### Example 2: TMPTA/DMI-AC(2:1)+ crosslinked polymer 3 %

A lithium metal battery was manufactured in the same manner as in Example 1, except that the composition for forming a gel-type polymer electrolyte was prepared according to the following process.

The composition for forming a gel polymer electrolyte was prepared by mixing TMPTA, which is a multifunctional crosslinking agent including at least three functional groups, DMI-Ac of Preparation Example 1, lithium hydroxide (LiOH), a liquid electrolyte, and benzoin ethyl ether (Sigma-Aldrich, 240.30 g/mol) as an initiator.

For use as the liquid electrolyte, a solution in which 0.6 M of LiBF₄ and 0.6 M of LiDFOB were added to a mixed solvent of DEC and FEC mixed at a volume ratio of 2:1 was used.

Based on 100 parts by weight of the total weight of the composition, 2 parts by weight of TMPTA, 1 parts by weight of DMI-AC, and 97 parts by weight of liquid electrolyte were used. Based on 100 parts by weight of the total weight of TMPTA and DMI-AC, 3 parts by weight of the initiator was used.

Here, the mixing weight ratio of TMPTA and DMI-AC was 2:1.

### Example 3: TMPTA/DMI-AC(2.5:0.5)+ crosslinked polymer 3 %

A lithium metal battery was manufactured in the same manner as in Example 1, except that the mixing weight ratio of TMPTA and DMI-AC was changed to 2.5:0.5 in preparing the composition for forming a gel-type polymer electrolyte.

### Example 4: TMPTA/DMI-AC(7:1)+ crosslinked polymer 3 %

A lithium metal battery was manufactured in the same manner as in Example 1, except that the mixing weight ratio of TMPTA and DMI-AC was changed to 7:1 in preparing the composition for forming a gel-type polymer electrolyte.

### Example 5: DPHA/DMI-AC(2.5:0.5)+ crosslinked polymer 3 %

A lithium metal battery was manufactured in the same manner as in Example 1, except that dipentaerythritol hexa-acrylate (DPHA) was used instead of TMPTA in preparing the composition for forming a gel-type polymer electrolyte.

### Comparative Example 1: TMPTA

A gel-type polymer electrolyte and a lithium metal battery were prepared in the same manner as in Example 1, except that the composition for forming a gel-type polymer electrolyte was prepared by using TMPTA, a liquid electrolyte in which 1.3M LiPF₆ was dissolved in a mixed solvent of ethylene carbonate (EC), dimethyl carbonate (DMC), and ethyl methyl carbonate (EMC) (at weight ratio of 1:1:0.5), and benzoin ethyl ether (Sigma-Aldrich, 240.30 g/mol) as an initiator.

### Evaluation Example 1: Scanning electron microscopy (SEM)

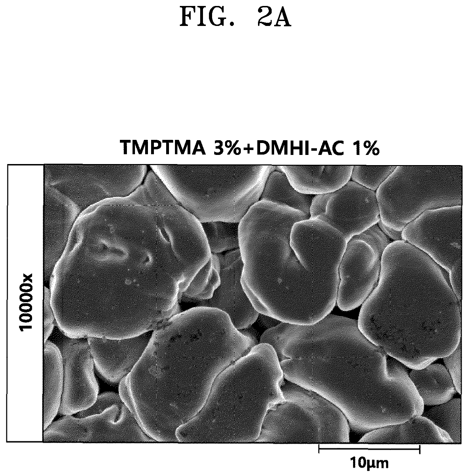

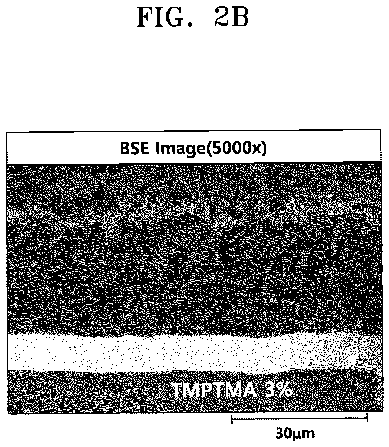

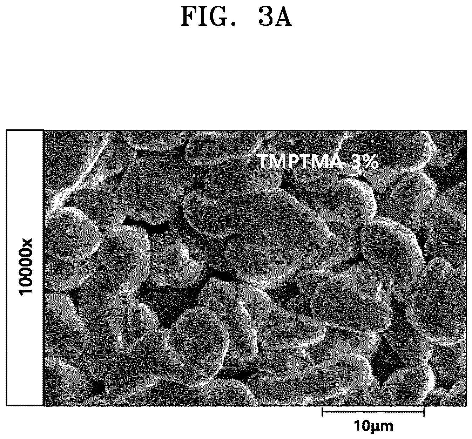

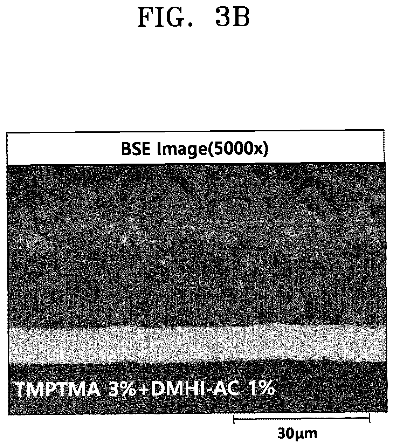

Regarding the lithium metal batteries of Example 1 and Comparative Example 1, the electrodeposition shape was examined, and the results are analyzed using a scanning electron microscope. The analysis results obtained by scanning electron microscopy are shown in FIGS. 2A, 2B, 3A, and 3B.

FIGS. 2A and 2B are SEM images showing electrodeposition shape on the surface of the lithium metal formed on the anode current collector in the lithium metal battery of Example 1, and FIGS. 3A and 3B are SEM images showing electrodeposition shape of the lithium metal formed on the anode current collector in the lithium metal battery of Comparative Example 1.

Referring to FIGS. 3A and 3B, it was confirmed that, when DMI-AC was added to TMPTA, the electrodeposition shape was more granular and becomes larger than the deposition shape with TMPTA alone, demonstrating increased electrodeposition density by suppressing dendritic growth of lithium.

Accordingly, it was confirmed that the height of the lithium metal layer in the lithium metal battery of Example 1 using the composition for forming a GPE containing DMI-AC was smaller than the height of the lithium metal layer in the lithium metal battery of Comparative Example 1 using the composition for forming a GPE containing TMPTA, indicating that the electrodeposition density has been slightly increased.

### Evaluation Example 2: Lifespan at high temperature (45 °C)

The charge/discharge characteristics for the lithium metal batteries of Examples 1 to 5 and Comparative Example 1 were evaluated under the following conditions.

Each lithium metal battery was charged with a constant current of 0.1 C rate at 45 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.1 C rate until the voltage reached 3.0 V (vs. Li) during discharging (formation cycle).

Each lithium metal battery that have undergone the formation cycle was charged with a constant current of 0.2 C rate at 45 °C until a voltage reached 4.3 V (vs. Li), and was then cut-off at a current of 0.05 C rate while maintaining the voltage at 4.3 V in a constant voltage mode. Subsequently, each lithium metal battery was discharged with a constant current of 0.5 C rate until the voltage reached 3.0 V (vs. Li) during discharging (1st cycle). This cycle was repeated under the same conditions up to the 12^{th} cycle.

In all charging and discharging cycles, a 10-minute stop time was provided after every one charging and discharging cycle. Some of the results of the charging and discharging experiments at room temperature are shown in FIGS. 2A to 2C. The capacity retention ratio is defined by Equation 1, and the results are shown in Table 1.

### <Equation 1>

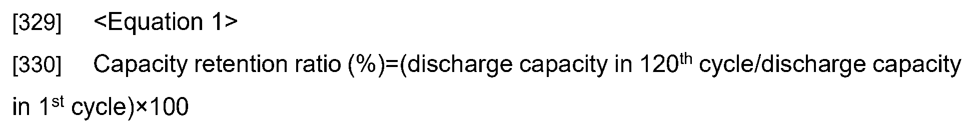

Capacity retention ratio (%)=(discharge capacity in 120th cycle/discharge capacity in 1st cycle)×100

**[Table 1]**

| Division | Electrolyte | Capacity retention ratio (%) |
|---|---|---|
| Example 1 | TMPTA/DMI-AC(2.9:0.1) crosslinked polymer 3% | 73.5 |
| Example 2 | TMPTA/DMI-AC(2:1) crosslinked polymer 3 % | 72.1 |
| Example 3 | TMPTA/DMI-AC(5:1) crosslinked polymer 3 % | 72.5 |
| Example 4 | TMPTA/DMI-AC(7:1) crosslinked polymer 3 % | 74.7 |
| Example 5 | DPHA/DMI-AC(5:1) crosslinked polymer 3 % | 81.2 |
| Comparative Example 1 | TMPTA | 68.3 |

As shown in Table 1, the lithium metal battery of Comparative Example 1 showed decreased capacity reaction ration due to side reactions between lithium and the electrolyte, whereas the lithium metal batteries of Examples 1 to 5 showed improved capacity retention ratios compared to the lithium metal battery of Comparative Example 1. Such improved capacity retention ratios were resulted due to the improved long-term lifespan characteristics achieved by physically suppressing the dendritic growth using the gel-type polymer electrolyte including the crosslinked polymer, such as TPMPTA and DMI-Ac.

### Evaluation Example 3: High-rate characteristics

Each of the lithium metal batteries prepared in Examples 1 to 5 and Comparative Example 1 was charged with a constant current of 0.1 C rate at 45 °C until a voltage reached 4.3 V (vs. Li), and was then cut-off at a current of 0.05 C rate while maintaining the voltage at 4.3 V in a constant voltage mode. Subsequently, each of the lithium metal batteries was discharged at a constant current rate of 0.1 C until the voltage reached 2.8 V (vs. Li) (1^{st} cycle, formation cycle).

The lithium metal batteries that have undergone the 1^{st} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium metal batteries was discharged at a constant current rate of 0.2 C until the voltage reached 2.8 V (vs. Li) (2^{nd} cycle).

The 2^{nd} cycle was repeated under the same conditions up to the 11^{th} cycle.

The lithium metal batteries that have undergone the 11^{th} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium metal batteries was discharged at a constant current rate of 0.5 C until the voltage reached 2.8 V (vs. Li) (12^{th} cycle).

The 12^{thd} cycle was repeated under the same conditions up to the 21^{st} cycle.

The lithium secondary batteries that have undergone the 21^{st} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium metal batteries was discharged at a constant current rate of 1 C until the voltage reached 2.8 V (vs. Li) (22^{nd} cycle).

The 22^{nd} cycle was repeated under the same conditions up to the 31^{st} cycle.

The lithium metal batteries that have undergone the 31^{st} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium metal batteries was discharged at a constant current rate of 2 C until the voltage reached 2.8 V (vs. Li) (32^{nd} cycle).

The 32^{nd} cycle was repeated under the same conditions up to the 41^{st} cycle.

The lithium metal batteries that have undergone the 41^{st} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium metal batteries was discharged at a constant current rate of 3 C until the voltage reached 2.8 V (vs. Li) (42^{nd} cycle). The 42^{nd} cycle was repeated under the same conditions up to the 51^{st} cycle.

The lithium metal batteries that have undergone the 51^{st} cycle were charged with in a constant current mode at a current rate of 0.2 C at 45 °C until the voltage reached 4.3 V (vs. Li), and then, while maintaining the voltage of 4.3 V in the constant voltage mode, the voltage was cut-off at a current rate of 0.05 C. Subsequently, each of the lithium batteries was discharged at a constant current of 0.5 C rate until the voltage reached 2.8 V (vs. Li) (52^{nd} cycle), and such a cycle was repeated (50 times) under the same conditions until the 101^{st} cycle.

After every one charge/discharge cycle in all the charge/discharge cycles, there was a 10-minute pause time.

Some of the results of the charging and discharging experiment are shown in Table 2. The high-rate characteristics are defined by Equation 2: 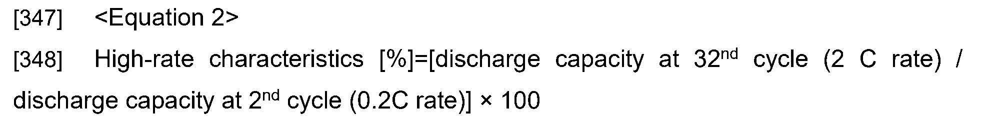 <Equation 2> High-rate characteristics [%]=[discharge capacity at 32nd cycle (2 C rate) / discharge capacity at 2nd cycle (0.2C rate)] × 100

**[Table 2]**

| Division | Electrolyte | Capacity retention ratio (%) |
|---|---|---|
| Example 1 | TMPTA/DMI-AC(2.9:0.1) crosslinked polymer 3% | 46.2 |
| Example 2 | TMPTA/DMI-AC(2:1) crosslinked polymer 3 % | 46.0 |
| Example 3 | TMPTA/DMI-AC(5:1) crosslinked polymer 3 % | 46.3 |
| Example 4 | TMPTA/DMI-AC(7:1) crosslinked polymer 3 % | 48.4 |
| Example 5 | DPHA/DMI-AC(5:1) crosslinked polymer 3 % | 63.2 |
| Comparative Example 1 | TMPTA crosslinked polymer 3 % | 38.2 |

Referring to Table 2, it was confirmed that the lithium metal batteries of Examples 1 to 5 including the gel-type polymer electrolyte including the crosslinked polymer obtained by the reaction of TMPTMA and DMI-Ac had improved high-rate characteristics compared to the lithium metal battery of Comparative Example 1. These results were obtained since the compound of Formula 2 increased oxidation stability and physical strength due to increased crosslinking of TMPTMA, thereby further increasing stability, and since the gel-type polymer electrolyte physically suppressed the dendritic growth, thereby improving long lifespan characteristics.

### Evaluation Example 4: Interfacial resistance

For the lithium metal batteries of Examples 1 to 5 and Comparative Example 1, the interfacial resistance of the anode was used by a 2-probe method using an impedance analyzer (Solartron 1400A/1455A impedance analyzer). The frequency range was 0.1 Hz to 1 MHz, and the amplitude voltage was 10 mV. The measurement was performed at 25 °C in the air atmosphere.

A Nyquist plot was prepared for the impedance measurement results when 3 hours had elapsed since the manufacture of the lithium metal batteries, and the interface resistance of the anode was determined by the position and size of the semicircle. The difference between the left x-axis intercept and the right x-axis intercept of the semicircle represents the interface resistance at the electrode. The interfacial resistance results are shown in Table 3.

**[Table 3]**

| Division | Electrolyte | Interfacial resistance (Ωcm²) |
|---|---|---|
| Example 1 | TMPTA/DMI-AC(2.9:0.1) crosslinked polymer 3% | 6.7X 10⁻³ |
| Example 2 | TMPTA/DMI-AC(2:1) crosslinked polymer 3 % | 2.1 X 10⁻² |
| Example 3 | TMPTA/DMI-AC(5:1) 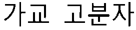 3% | 9.4 X 10⁻³ |
| Example 4 | TMPTA/DMI-AC(7:1) crosslinked polymer 3 % | 8.3 X 10⁻³ |
| Example 5 | DPHA/DMI-AC(3:1) crosslinked polymer 3 % | 1.1 X 10⁻² |
| Comparative Example 1 | TMPTA crosslinked polymer 3 % | 6.3 X 10⁻³ |

As shown in Table 3, the interfacial resistance of the lithium metal batteries of Examples 1 to 5 was reduced compared to that of the lithium metal battery of Comparative Example 1.

### Evaluation Example 5: Ion conductivity

Regarding the lithium metal batteries of Examples 1 to 5 and Comparative Example 1, the ion conductivity of the gel-type polymer electrolyte was manufactured using the alternating current impedance method. The characteristics of the interfacial resistance and bulk resistance of the cell were measured as impedance changes over time. The ion conductivity of each gel-type polymer electrolyte was calculated by Equation 3, and the results are shown in Table 4.

$σ = 1 / {R}_{b} \times t / A$

wherein, in Equation 3, R_{b} refers to resistance of an electrolyte, t refers to a thickness of an electrolyte film, and A refers to an area of an electrolyte film. Here, the electrolyte film includes the separator, and a thickness of the electrolyte film is the same as that of the separator.

**[Table 4]**

| Division | Gel-type polymer electrolyte | Ion conductivity (mS/cm) |
|---|---|---|
| Example 1 | TMPTA/DMI-AC(2.9:0.1) crosslinked polymer 3% | 0.26 |
| Example 2 | TMPTA/DMI-AC(2:1) crosslinked polymer 3% | 0.59 |
| Example 3 | TMPTA/DMI-AC(5:1) 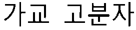 3% | 0.41 |
| Example 4 | TMPTA/DMI-AC(7:1) crosslinked polymer 3% | 0.34 |
| Example 5 | DPHA/DMI-AC(3:1) crosslinked polymer 3 % | 0.73 |
| Comparative Example 1 | TMPTA crosslinked polymer 3 % | 0.25 |

Referring to Table 4, it was confirmed that the gel-type polymer electrolytes of Examples 1 to 5 had excellent ion conductivity compared to the gel-type polymer electrolyte of Comparative Example 1.

### Evaluation Example 6: Electrodeposition density

For the lithium metal layers formed on the anode current collectors of the lithium metal batteries of Example 1 and Comparative Example 1, SEM analysis was performed, and the results are shown in FIGS. 2A, 2B, 3A, and 3B. FIGS. 2A and 2B show the SEM analysis results for Example 1, and FIGS. 3A and 3B show the SEM analysis results for Comparative Example 1.

Referring to FIGS. 2A and 3A, the lithium metal layer of Example 1 was electrodeposited uniformly with a large electrodeposition shape and improved electrodeposition density at the same time, by adding DMHI-AC to TMPTMA in the preparation of the gel-type polymer electrolyte, compared to the lithium metal layer of Comparative Example 1.

Referring to FIGS. 2B and 3B, the lithium metal layer of Example 1 had increased electrodeposition density compared to the lithium metal layer of Comparative Example 1. These results indicate that the addition of DMHI increased the size of the electrodeposition shape to become more granular and the dendritic growth of lithium was suppressed, leading to an increase in the electrodeposition density.

Although exemplary embodiments have been described in detail with reference to the accompanying drawings, the present inventive concept is not limited to these examples. It is obvious that those skilled in the art to which the present creative idea belongs can derive various examples of changes or modifications within the scope of the technical idea described in the claims, and these, of course, belong to the technical scope of the present creative idea.

## Claims

1. A lithium metal battery comprising:
a cathode; an anode current collector; and an electrolyte layer arranged between the cathode and the anode current collector,
wherein the electrolyte layer includes a gel-type polymer electrolyte, and the gel-type polymer electrolyte includes a crosslinked polymer and a liquid electrolyte containing a lithium salt and an organic solvent, the crosslinked polymer including a polymerization product of a multifunctional polymerizable monomer and one or more selected from a compound of Formula 1 and a compound of Formula 1-1: 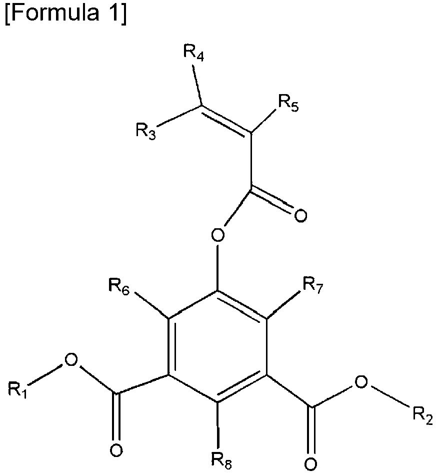
wherein, in Formula 1, R₁ and R₂ are a substituted or unsubstituted C1-C30 alkyl group or a substituted or unsubstituted C6-C30 aryl group,
R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group, 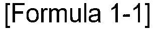 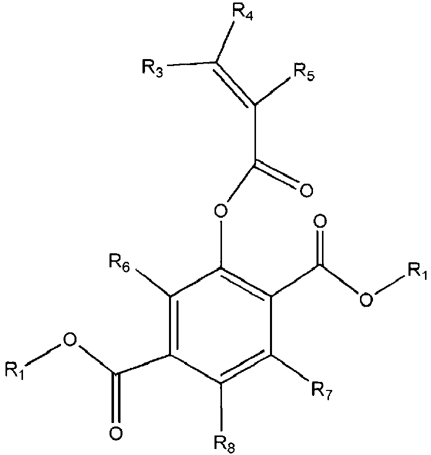
wherein, in Formula 1-1, R₁ and R₂ are a substituted or unsubstituted C1-C30 alkyl group or a substituted or unsubstituted C6-C30 aryl group, R₃ to R₅ are each independently hydrogen or a substituted or unsubstituted C1-C30 alkyl group, and
R₆ to R₈ are each independently hydrogen, a substituted or unsubstituted C1-C30 alkyl group, or a substituted or unsubstituted C6-C30 aryl group.

2. The lithium metal battery of claim 1, wherein
the compound of Formula 1 is a compound of Formula 2, and
the compound of Formula 2 is a compound of Formula 2-1: 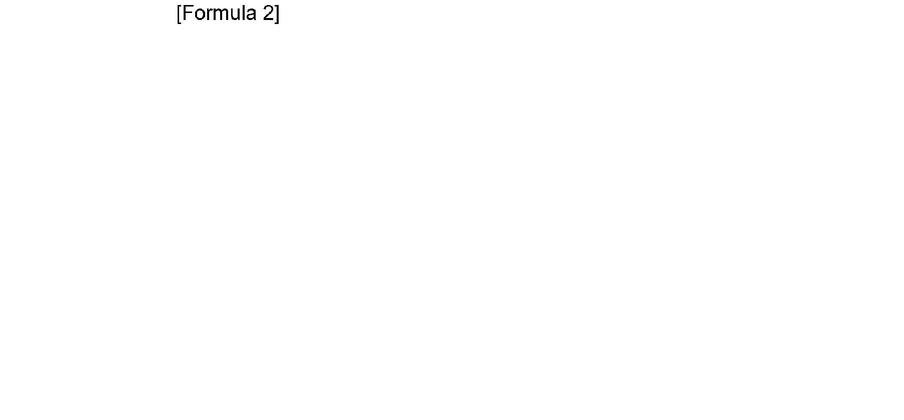 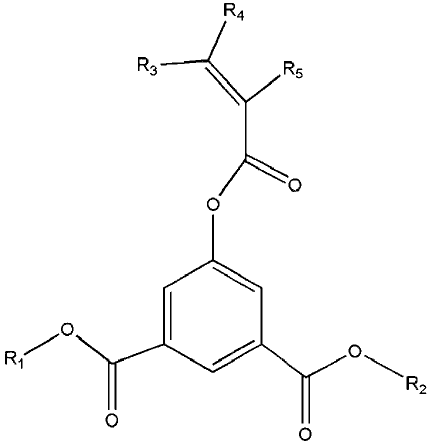
wherein, in Formula 2, R₁ and R₂ are a C1-C30 alkyl group, and
R₃ to R₅ are each independently hydrogen or a C1-C30 alkyl group, 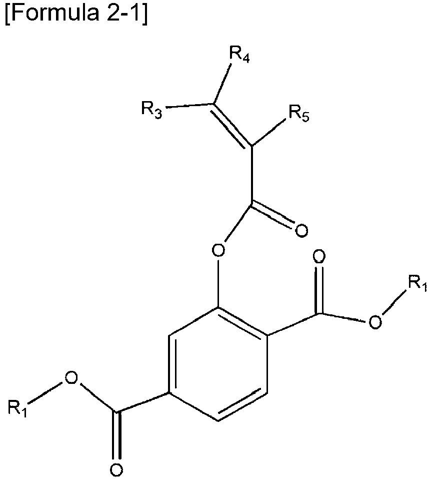
wherein, in Formula 2-1, R₁ and R₂ are a C1-C30 alkyl group, and
R₃ to R₅ are each independently hydrogen or a C1-C30 alkyl group.

3. The lithium metal battery of claim 2, wherein
R₁, R₂, and R₅ are each independently a methyl group, a propyl group, a butyl group, or a pentyl group, and R₃ and R₄ are hydrogen.

4. The lithium metal battery of claim 1, wherein
the polymerizable monomer is one or more selected from pentaerythritol tetraacrylate, pentaerythritol tetramethaacrylate, trimethylolpropane triacrylate, trimethylolpropane trimethaacrylate, propoxylated(3) trimethylolpropane triacrylate (PO(3)TMPTA), propoxylated(6) trimethylolpropane triacrylate (PO(6)TMPTA), ethoxylated trimethylolpropane triacrylate, di(trimethylolpropane) tetraacrylate, pentaerythritol triacrylate (PETA), propoxylated glyceryl triacrylate, tris(2-hydroxyethyl)isocyanurate (THEICTA), and dipentaerythritol pentaacrylate (DPEPA).

5. The lithium metal battery of claim 1, wherein,
in the gel-type polymer electrolyte, an amount of the crosslinked polymer 1 to 10 parts by weight based on 100 parts by weight of a total weight of the gel-type polymer electrolyte, and
an amount of the liquid electrolyte is 90 to 99 parts by weight based on 100 parts by weight of a total weight of the gel-type polymer electrolyte.

6. The lithium metal battery of claim 1, wherein
a mixed weight ratio of the multifunctional polymerizable monomer and the compound of Formula 1 is 30:1 to 2:1.

7. The lithium metal battery of claim 1, wherein
the compound of Formula 1 is a compound selected from compounds of Formulae 3 to 6:

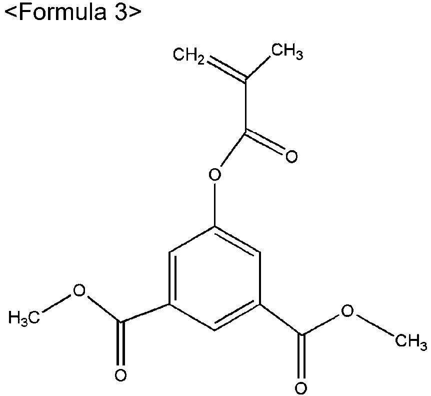

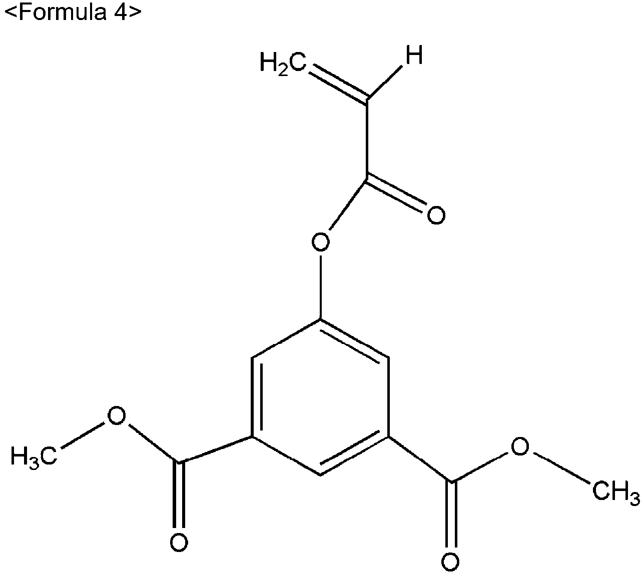

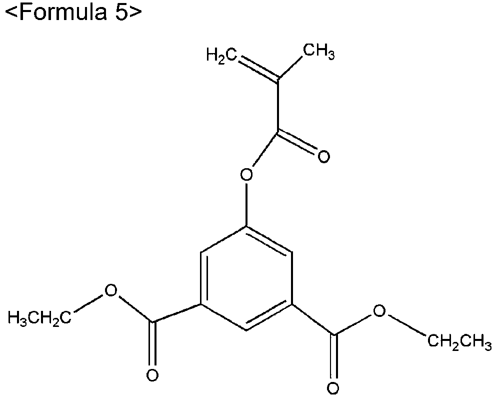

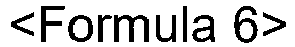

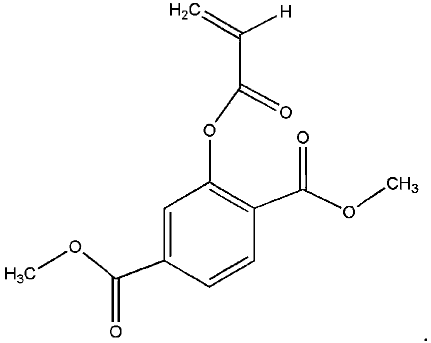

8. The lithium metal battery of claim 1, wherein
the crosslinked polymer has a lithium-substituted form, and
a redox potential of the compound of Formula 1 is less than 2 eV (Li/L+).

9. The lithium metal battery of claim 1, wherein the electrolyte layer further comprising a separator,
wherein the separator comprises a porous substrate.

10. The lithium metal battery of claim 1, wherein the lithium salt includes a first lithium salt and a second lithium salt,
the first lithium salt and the second lithium salt each independently include a fluorine-containing borate-based lithium salt,
the fluorine-containing borate-based lithium salt includes LiBF₄, LiBF₃(C₂F₅), compounds of Formulae 7 to 18, or a combination thereof, wherein amounts of the first lithium salt and the second lithium salt are each greater than 0 but is less than or equal to 1.2 M, and
a ratio of the amount of the first lithium salt and the amount of the second lithium salt is 1:9 to 9:1:

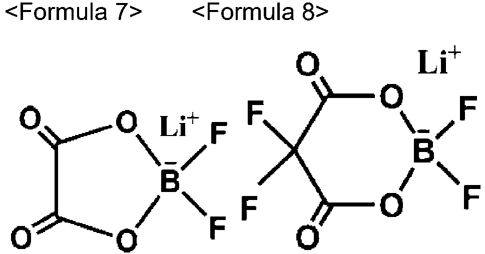

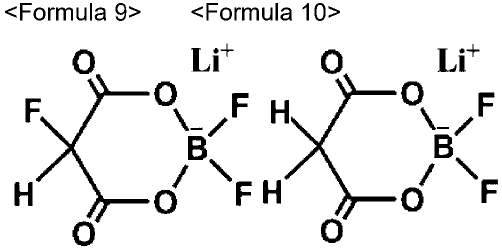

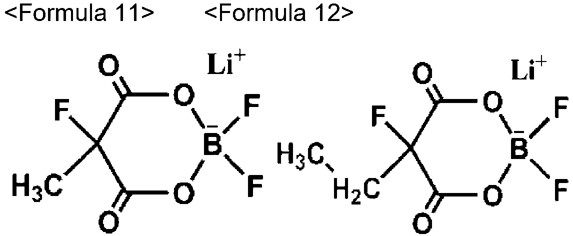

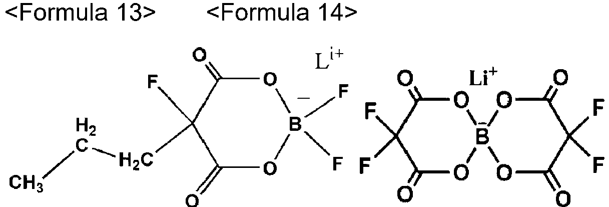

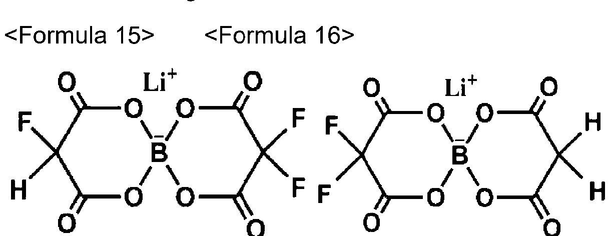

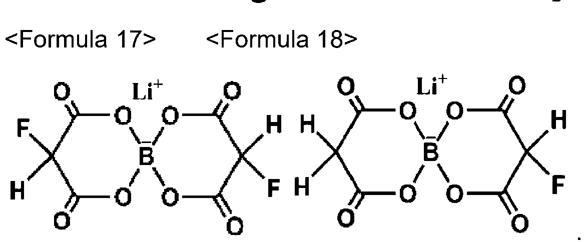

11. The lithium metal battery of claim 1, wherein the organic solvent includes
a first organic solvent and a second organic solvent,
the first organic solvent includes a linear carbonate compound,
the second organic solvent includes a cyclic carbonate compound substituted with a substituent, and
the substituent includes a halogen, a cyano group (CN), a nitro group(NO₂), or a combination thereof.

12. The lithium metal battery of claim 11, wherein the first organic solvent includes diethyl carbonate (DEC), dimethyl carbonate (DMC), ethyl methyl carbonate (EMC), methylpropyl carbonate, ethylpropyl carbonate, dipropyl carbonate, or a combination thereof, and
the second organic solvent includes vinylene carbonate substituted with one or more selected from a halogen, a cyano group (CN), and a nitro group (NO₂); vinyl ethylene carbonate substituted with one or more selected from a halogen, a cyano group (CN), and a nitro group(NO₂); fluoroethylene carbonate (FEC); fluoroethylene carbonate substituted with one or more selected from a halogen, a cyano group (CN). and a nitro group(NO₂); or a combination thereof.

13. The lithium metal battery of claim 1, wherein the electrolyte layer further including a separator, and
the lithium metal battery comprises: the anode current collector; the separator arranged on the anode current collector; the gel-type polymer electrolyte arranged on the separator; and the cathode arranged on the gel-type polymer electrolyte.

14. The lithium metal battery of claim 1, further comprising a lithium metal layer between the anode current collector and the electrolyte layer, wherein
in X-ray photoelectron spectroscopy (XPS) on a surface of the lithium metal layer, an intensity of a fluorine peak is greater than that of an oxygen peak.

15. The lithium metal battery of claim 1, further comprising an anode active material layer, a protective layer, or a combination thereof between the electrolyte layer and the anode current collector.

16. The lithium metal battery of claim 15, wherein
the anode active material layer includes a lithium metal foil, lithium metal powder, lithium alloy foil, lithium alloy powder, or a combination thereof, a lithium alloy includes lithium and a first metal, and
the first metal includes indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (St), lanthanum (La), or a combination thereof.

17. The lithium metal battery of claim 1, further comprising
a solid electrolyte, a liquid electrolyte, or a combination thereof, wherein
the solid electrolyte is an oxide-based solid electrolyte, a sulfide-based solid electrolyte, or a combination thereof.

18. The lithium metal battery of claim 1, wherein
the cathode comprises a cathode current collector and a cathode active material layer,
one or more of the cathode current collector and the anode current collector includes a base film and a metal layer arranged on one side or both sides of the base film,
the base film includes a polymer, the polymer including polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

19. A manufacturing method for the lithium metal of claim 1, comprising:
preparing an anode current collector;
preparing an electrolyte layer;
preparing a cathode;
stacking the anode current collector, the electrolyte layer, and the cathode to prepare an assembly;
injecting a composition for forming a gel-type polymer electrolyte to the assembly; and
cross-linking the injected composition for forming a gel-type polymer electrolyte to prepare a lithium metal battery including an electrolyte layer including a gel-type polymer electrolyte, wherein
the composition for forming a gel-type polymer electrolyte includes: a multifunctional polymerizable monomer; one or more selected from a compound represented by Formula 1 and a compound represented by Formula 1-1; a liquid electrolyte; and an initiator: 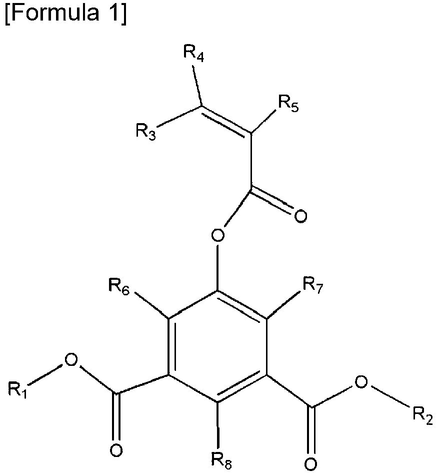
wherein, in Formula 1, R₁ and R₂ are a C1-C30 alkyl group or a C6-C30 aryl group,
R₃ to R₅ are each independently hydrogen or a C1-C30 alkyl group, and
R₆ to R₈ are each independently hydrogen, a C1-C30 alkyl group, or a C6-C30 aryl group: 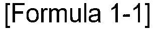 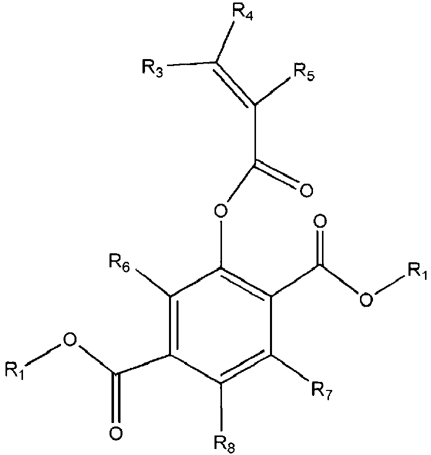
wherein, in Formula 1-1, R₁ and R₂ are a C1-C30 alkyl group or a C6-C30 aryl group,
R₃ to R₅ are each independently hydrogen or a C1-C30 alkyl group, and R₆ to R₈ are each independently hydrogen, a C1-C30 alkyl group, or a C6-C30 aryl group.

20. The manufacturing method of claim 19, wherein
the cross-linking is performed by heat treatment at a temperature of 40 °C to 120 °C.
